# EUROPEAN PATENT SPECIFICATION

(11) **EP 1 231 472 B1**
(45) Date of publication and mention of the grant of the patent: **02.01.2008**
(21) Application number: 02250913.7
(22) Date of filing: 11.02.2002
(51) Int. Cl.: G01N 21/25, G01N 35/02

(54) **Integrated fluid delivery and analysis system**
Integriertes System zur Flüssigkeitsabgabe und Analyse
Système intégré de distribution de fluide et d'analyse

(30) Priority: 01.02.2002 US 61416 P; 10.02.2001 US 267639 P
(43) Date of publication of application: 14.08.2002
(73) Proprietor: MOLECULAR DEVICES CORPORATION, Sunnyvale, CA 94089-1136 (US)
(72) Inventor: Giebeler, Robert H., Sunnyvale California 94089-1136 (US); Humphries, Gillian M., Sunnyvale California 94089-1136 (US); Ogle, David G., Sunnyvale California 94089-1136 (US); Hafeman, Dean G., Sunnyvale California 94089-1136 (US); Kaye, Roger A., Sunnyvale California 94089-1136 (US); Modlin, Douglas N., Sunnyvale California 94089-1136 (US); McNerney, Steven A., Sunnyvale California 94089-1138 (US)
(74) Representative: Harrison Goddard Foote

(56) References cited:
- EP-A- 0 628 823
- EP-A- 0 703 455
- LITTLE J N ET AL: "RECENT ADVANCES IN ROBOTIC AUTOMATION OF MICROPLATE ASSAYS" LABORATORY AUTOMATION & INFORMATION MANAGEMENT, ELSEVIER SCIENCE PUBLISHERS BV., AMSTERDAM, NL, vol. 26, no. 2, 1 November 1994 (1994-11-01), pages 89-99, XP000476920 ISSN: 1381-141X

## Description

### Field of the Invention

The invention relates to fluid delivery and analysis systems, and more particularly to integrated fluid delivery and analysis systems.

### Background of the Invention

Modern laboratory techniques such as assay development and high-throughput screening of candidate drug compounds may involve preparing and analyzing hundreds of thousands or millions of samples using techniques as diverse as luminescence, absorbance, and scattering. Recently, the processing of such samples has been facilitated by packaging samples in high-density sample holders, such as microplates, for analysis together in an automated device.

Unfortunately, prior systems for processing multiple samples have significant shortcomings. For example, prior systems may not have the flexibility to process sample holders with different sample densities, or the sensitivity or accuracy to process sample holders with small sample volumes. Moreover, prior systems may have large footprints, so that they occupy significant areas in laboratory settings, in which space is scarce. In addition, prior systems may be limited to single (unit) operations, so that, for example, they can dispense samples or analyze samples, but not do both. Thus, prior systems may require different apparatus for different applications, or lead to missed hits, limited research capabilities, lower throughput, and/or increased costs for compounds, assays, and reagents.

### Summary of the Invention

The invention provides an integrated fluid delivery and analysis system comprising components for preparing and analyzing samples. The components may include a transport module, a fluidics module, and an analysis module, among others. The invention includes instruments and systems as described in the claims.

### Brief Description of the Drawings

Figure 1 is a perspective view of an instrument system constructed in accordance with aspects of the invention.

Figure 2A is a cross-sectional side view of the instrument system of Figure 1, taken generally along line 2A-2A in Figure 1, showing portions of a fluidics module, material exchange module, and transport module.

Figure 2B is a cross-sectional end view of the instrument system of Figure 1, taken generally along line 2B-2B in Figure 1, also showing portions of a fluidics module, material exchange module, and transport module.

Figures 3A and 3B are complementary perspective views of a fluidics module constructed in accordance with aspects of the invention.

Figure 4 is a perspective view of portions of the fluidics module of Figures 3A and 3B, showing a fluid dispense system, a material exchange system, and a housing (in dashes).

Figure 5 is an alternative perspective view of portions of the fluidics module of Figures 3A and 3B, showing the fluid dispense system and material exchange system.

Figure 6 is a perspective view of a dispense assembly from the fluid dispense system of Figure 5.

Figure 7 is a partially exploded perspective view of the dispense assembly of Figure 6.

Figure 8 is a perspective view of a carriage from the material exchange system of Figure 5.

Figure 9 is an exploded perspective view of the carriage of Figure 8.

Figure 10 is a schematic view of an analysis module constructed in accordance with aspects of the invention.

Figure 11 is a perspective view of a transport module constructed in accordance with aspects of the invention.

Figure 12 is an exploded perspective view of a scanning optical stage assembly for use with the analysis module of Figure 10, in combination with the transport module of Figure 11.

Figure 13 is a perspective view of the optical stage assembly of Figure 12 mounted to the transport module of Figure 11.

Figure 14 is a perspective view from the other side of the transport module of Figure 11.

Figure 15 is a perspective view of an air circulation enclosure for the underside of the transport module of Figure 11.

Figure 16 is a perspective view of a variant of the transport module of Figure 11.

Figure 17 is a perspective view of the optical stage assembly of Figure 12 mounted to the transport module of Figure 16.

Figure 18 is a perspective view of a portion of a temperature control system for use with the transport module of Figure 16.

### Detailed Description and Best Mode of the Invention

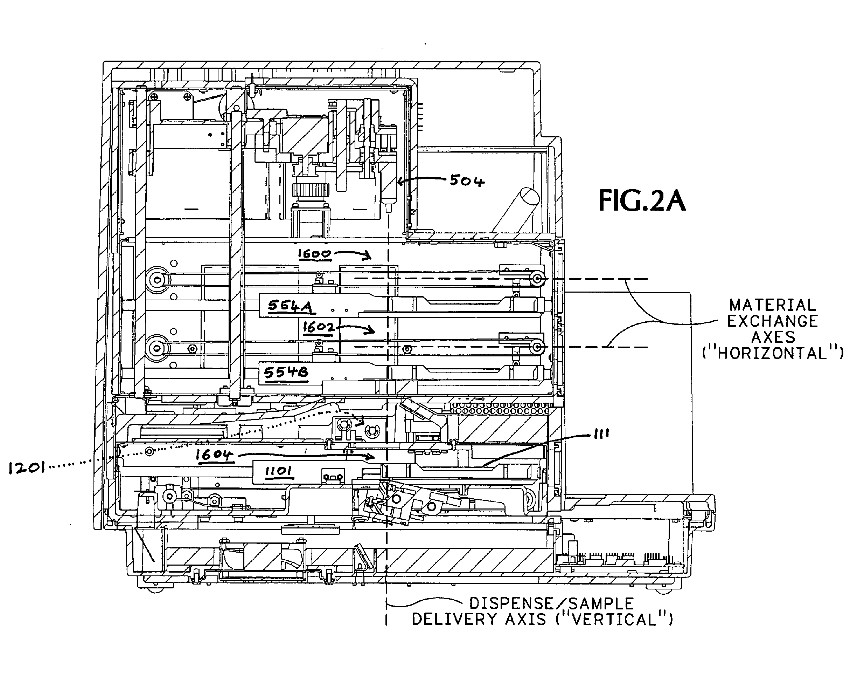

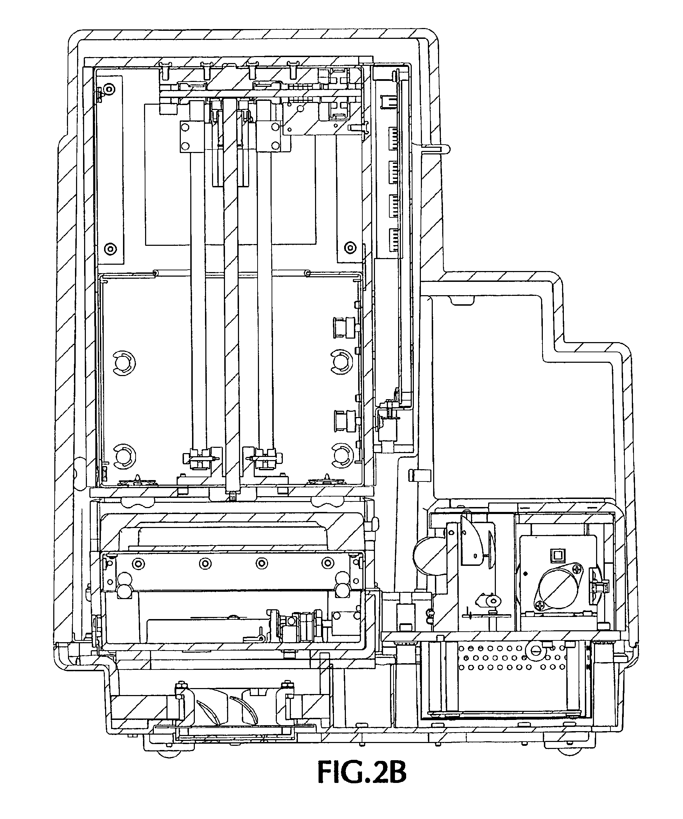

With reference in particular to Figures 2A, 5 and 7, the drawings illustrate an instrument for analyzing a sample, comprising: a detection device 1201 configured to detect light from a sample at an examination site, a sample delivery axis (Fig 2A) extending substantially vertically from the examination site 1604; and at least one material exchange station 1600 along the sample delivery axis above the examination site.

Typically the examination site is one of a plurality of examination sites located at an analysis station 1604, each examination site having a sample delivery axis extending vertically from the examination site to the material exchange station 1600. Thus, the examination site may be one of a plurality of wells in a multi-well plate. The instrument suitably comprises a fluidics head 504, 600 that is moveable along the sample delivery axis to deliver fluid to the examination site.

The fluidics head 504, 600 usually includes an array of fluid delivery channels 602, in which case the material exchange station 1600 is preferably configured to transfer pipette tips to and from the fluid delivery channels 602 on the fluidics head 504, 600

The instrument desirably comprises a carriage assembly 554A that moves material to and from the material exchange station 1600 in a direction substantially perpendicular to the sample delivery axis. Another feature of preferred instruments is a second material exchange station 1602, each material exchange station 1600, 1602 being located above the examination site along the sample delivery axis; in this case, each material exchange station 1600, 1602 preferably has a carriage assembly 554A, 554B that moves material to and from the material exchange station in a direction substantially perpendicular to the sample delivery axis.

The drawings also illustrate a fluid delivery system, comprising: a fluidics head assembly 504, 600 including a dispensing device 602; a drive mechanism 506 connected to the head assembly 504, 600 for moving the head assembly 504, 600 along a substantially vertical sample delivery axis (Fig 2A); and at least two material exchange stations 1600, 1602 located along the sample delivery axis, the head assembly 504, 600 being moveable to each material exchange station 1600, 1602 to pick up or deposit materials used to conduct an assay.

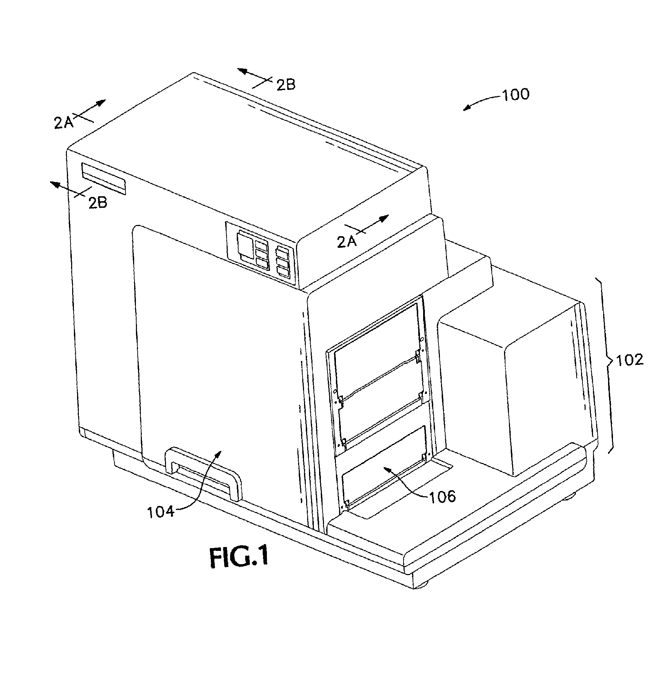

Figure 1, therefore, is a schematic view of an instrument system 100 for preparing and/or analyzing samples in accordance with aspects of the invention. System 100 includes a fluidics module 102, an analysis module 104, and a transport module 106. The fluidics module participates in sample preparation, for example, by adding (and/or removing) a component of a sample to and/or from a sample holder. The analysis module participates in sample analysis, for example, by performing an optical analysis of a sample based on photoluminescence, chemiluminescence, absorbance, and/or scattering, among others. The transport module participates in sample transport, for example, by moving a sample or sample holder between an input/output (I/O) site, the fluidics module, and the analysis module.

The components of system 100 may be partially or completely modular, potentially providing several benefits. First, modular construction allows nonfunctioning modules to be replaced with functioning modules, facilitating repair and reducing downtime. Second, modular construction allows outdated components to be replaced or augmented as operational requirements change, or as improved modules become available, providing for system growth.

Figure 2A is a cross-sectional view of the instrument 100 of Figure 1, showing details of the fluidics module 102, analysis module 104, and transport module 106. The fluidics module includes a dispense system having a dispense assembly 504 for dispensing fluid, and a material exchange system having a plurality of carriages 554A, 554B for transporting materials to and from the dispense assembly. The analysis module includes a light source, a detector, and optics adapted to direct light from the light source to a sample holder such as a microplate 111 positioned in an examination site, and from the sample holder to the detector. The analysis module further may include optics adapted to select the intensity, wavelength, and/or polarization of the light incident on the sample holder from the detector, and on the detector from the sample holder. The transport module includes a sample holder support fixture or carriage 1101 for supporting the sample holder and a drive system for moving the sample holder support fixture between loading/unloading positions and dispense/examination positions. The exchange positions of the fluidics module and the examination site of the analysis module may be separated by an integral openable/closable door that reduces or eliminates airflow and light leaks.

The dispense assembly and material exchange carriages are movable between a plurality of positions distinguishable by the operation or operations performed at each position.

The dispense assembly may be movable between two or more vertically separated positions, including (1) an upper resting position (shown), (2) a plurality of intermediate exchange positions, and (3) a lower dispensing position. The resting position may be used to store the dispense assembly between dispense operations. The exchange positions may be used to load and unload pipette tips, reagents, and other consumables during interactions with the material exchange carriages. The dispensing position may be used to dispense fluids into or onto a sample holder and/or to retrieve fluids from the sample holder. The dispensing position may be located at or adjacent an examination position (1600, 1602) of the associated analysis module, so that fluid may be dispensed and samples may be analyzed simultaneously and/or sequentially without further movement of the sample holder.

The material exchange carriages (554A, 554B) may be movable between two or more horizontally separated positions, including (1) an input/output position located just outside the module, (2) a resting position (shown) located just inside the module, and (3) an exchange position (1600, 1602) located farther inside the module. The input/output position may be used to load consumables and other materials onto the material exchange carriages, and to remove expended consumables from the carriages. A door may allow the carriage to exit and reenter the housing during movement to and from the input/output position. The resting position may be used to store the carriage between material exchange operations. The exchange positions may be used to present and receive pipette tips, reagents, and other consumables during interactions with the dispense assembly. Thus, the exchange positions of the dispense assembly and the material exchange carriages should be partially or totally coincident.

Further aspects of the invention are presented without limitation in the following sections: (I) Fluidics Module, (II) Analysis Module, (II1) Transport Module, and (IV) Examples.

### I. Fluidics Module

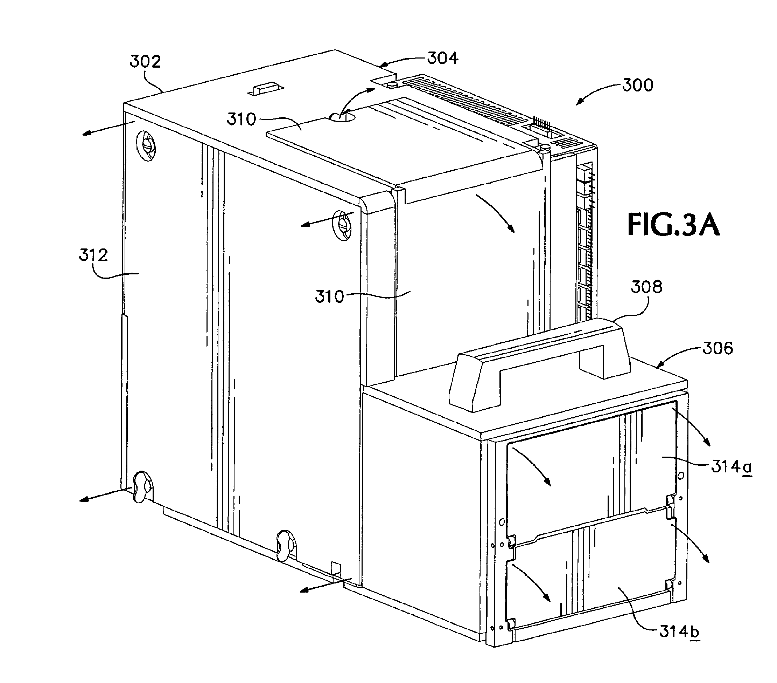

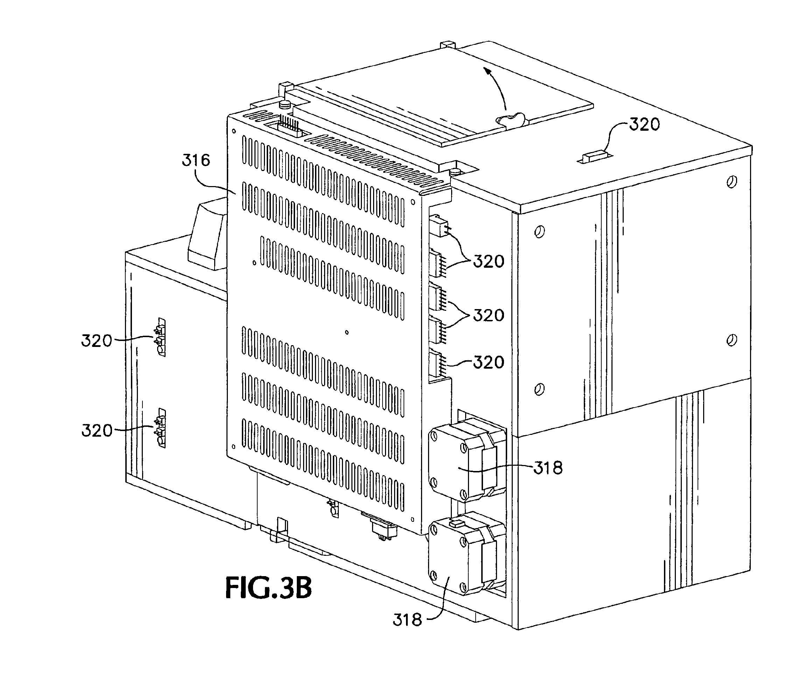

The fluidics module generally comprises any system or mechanism for automatically dispensing fluid into or onto a sample holder. Figures 3-9 show an exemplary fluidics module and components thereof constructed in accordance with aspects of the invention. The fluidics module may include a housing, a dispense system, and a material exchange system, among others, as described below. The housing may be used to enclose and support portions of the module. The dispense system may be used to dispense fluids such as reagents into a sample holder. The material exchange system may be used to supply the dispense system with consumables, such as pipette tips, reagents, and/or other materials.

### A. Housing

The housing generally comprises any system or mechanism for enclosing and optionally supporting components of the dispense and/or material exchange systems, protecting the components, the operator, and the samples, if any.

Figure 3 shows complementary perspective views of an exemplary fluidics module 300, illustrating external features of the module. These external features include a housing 302. The housing generally may be shaped in any form capable of enclosing the dispense and/or material exchange systems, and of interacting with any associated ancillary modules, such as a transport and/or analysis module. Here, the housing includes two substantially rectangular portions, specifically, a larger dispense portion 304 housing components of the dispense and material exchange systems, and a smaller contiguous input/output portion 306 housing components of the material exchange system. The housing generally may be composed of any material capable of interacting with and/or supporting attached portions of the dispense and/or material exchange systems, and any ancillary modules. An exemplary housing includes a low-cost, lightweight, rigid sheet metal chassis.

The housing may include handles, doors, and/or removable panels. For example, handles 308 may facilitate opening and/or carrying the module. Removable panels 310, 312 may facilitate service access to interior portions of the module, such as those involved in fluid dispensing. Doors 314a,b may facilitate material exchange within the module of consumables such as pipette tips and reagents, and removing expended consumables. In module 300, an upper door 314a may be used to supply new pipette tips and remove used pipette tips, and a lower door 314b may be used to supply reagents. Here, arrows indicate the general direction of motion of movable/removable components.

The housing allows better control of environmental conditions within the module, including light level, temperature, and humidity. Light level may be controlled using light-tight materials and junctions, and by closing the doors and removable panels during use. Temperature and humidity may be controlled actively by using a heater or humidifier, among others. Temperature and humidity also may be controlled passively by containing or releasing heat from drive components and moisture from evaporation, among others. Fluidics module 300 includes an active temperature control system having separate independently controlled heaters for the module as a whole and the fluidics system in particular, and a passive humidity control system that may nevertheless raise the humidity above the sample holder to at least about 90%.

The housing also may provide scaffolding to which components of the module may be attached for support, facilitating precision alignment between components, as desired. For example, some module components may be attached to the interior of the housing, as described below. Other module components such as electronic control panels 316, drivers 318, and electrical connectors 320 may be attached to the exterior of the housing, shielding them from conditions within the housing (such as high temperature and humidity) and making them more accessible for repair and/or replacement. The electrical connectors may include power connectors for inputting power to internal components of the module, such as drivers, sensors, etc. The electrical connectors also may include logic connectors for transmitting instructions and data between components of the module and any associated analyzer and/or external processor.

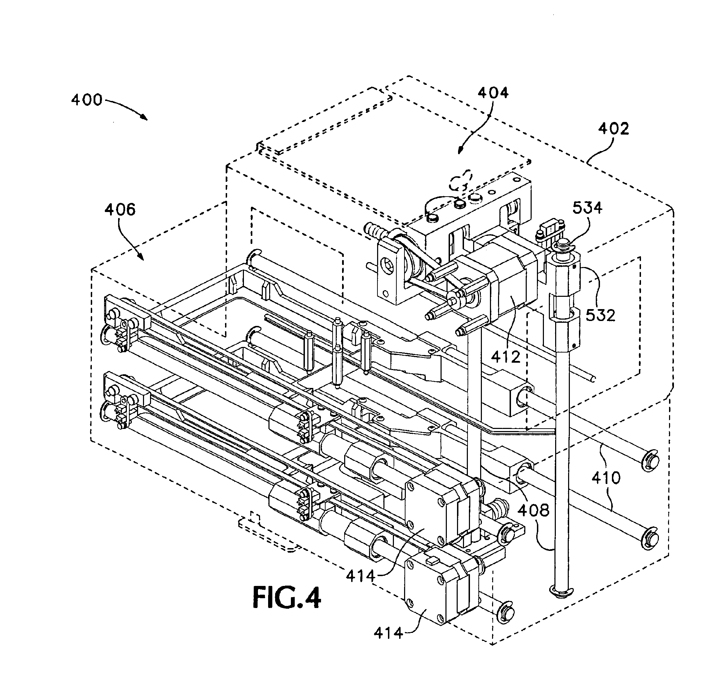

Figure 4 shows a perspective view of a fluidics module 400, illustrating the relationship between a housing 402 (shown in dashes), a dispense system 404 (shown without its dispense assembly), and a material exchange system 406. In particular, these figures show how the various guide shafts and drive motors of the dispense and material exchange systems attach to the housing. These attachments support the components during use and help to maintain their proper orientation. Vertical guide shafts 408 from the dispense system run along a vertical dimension of the housing, from top to bottom, whereas horizontal guide shafts 410 from the material exchange system run along a horizontal long dimension of the housing. The drive motors are attached to the same side of the housing, with a vertical drive motor 412 associated with the dispense system mounted near the top of the housing, and two horizontal driver motors 414 associated with the material exchange system attached near the bottom of the housing, generally below the vertical drive motor.

### B. Dispense System

The dispense system generally comprises any system or mechanism for dispensing fluids into a sample holder.

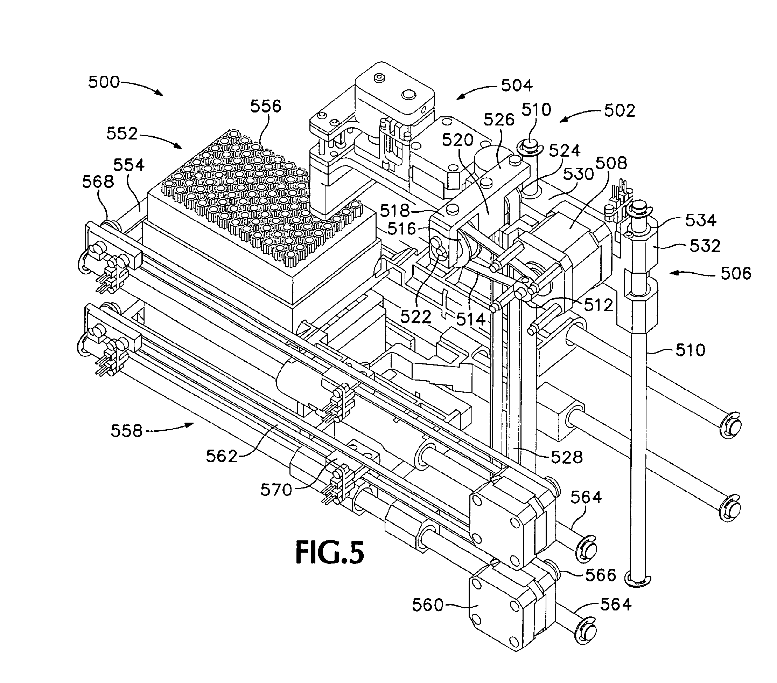

Figure 5 shows a perspective view of an exemplary fluidics module 500, including a dispense assembly driver 506 for moving a dispense assembly 504 for dispensing fluid and among different positions, such as the resting, exchange, and dispensing positions described above. The dispense system also may include additional components, such as a thermal regulator to control the temperature of the dispensed fluid, which may reduce bubble formation and/or better match reagent and sample temperature.

The exemplary dispense system provides a compact automatic plate-to-plate pipettor system, for use in a variety of assays. In particular, the system includes a compact modular folded pipettor head that is capable of rapid acceleration/movement/deceleration for noncontact dispensing down to 2 µL using 200 µL pipette tips.

### 1) Dispense assembly

The dispense assembly generally comprises any mechanism or system for dispensing fluid automatically into or onto a sample holder. The assembly may be capable of simultaneously and/or sequentially dispensing fluid in uniform and/or nonuniform aliquots at one or more sample sites. The dispense strategy may be coordinated with a suitable detection strategy, such as the time-tagging strategy described in U.S. Patent No. 6,236,456 published May 22, 2001. The assembly also may be capable of automatically loading and/or removing dispense elements, such as pipette tips.

The dispense assembly may use noncontact and/or contact dispense mechanisms, such as those described in WO 00/66269, published November 9, 2000.

A noncontact dispense mechanism generally comprises any mechanism for dispensing fluid in which the dispenser does not normally contact the sample or the sample holder into which the fluid is dispensed. An example of a manual noncontact dispenser is an eyedropper, which can dispense drops of fluid without contacting a sample or sample holder. The eyedropper uses changes in air pressure created by squeezing or releasing a bulb to draw fluid into and dispense fluid out of a dispense tube, respectively. Another example of a manual noncontact dispenser is a syringe. The syringe uses a positive-displacement piston (or an air-displacement piston) slidingly positioned within a syringe barrel to draw and dispense fluid.

A contact dispense mechanism generally comprises any mechanism for dispensing fluid in which the dispenser normally contacts the sample and/or sample holder into which the fluid is dispensed. An example of a contact dispenser is a pin transfer device. This device uses a pin to transfer small quantities of fluid between sample holders by contacting a tip of the pin to a fluid to pick up a drop of the fluid and then contacting the tip to a sample or sample holder to deposit the drop in the sample or sample holder.

Some systems may be interchangeable between noncontact and contact dispense mechanisms, depending on whether the fluid is dispensed (e.g., projected) through air or by fluid-to-fluid contact. For example, a noncontact dispense mechanism such as a pipette tip may be used in a contact format by contacting the pipette tip to a sample or sample holder to remove a "last drop" of fluid.

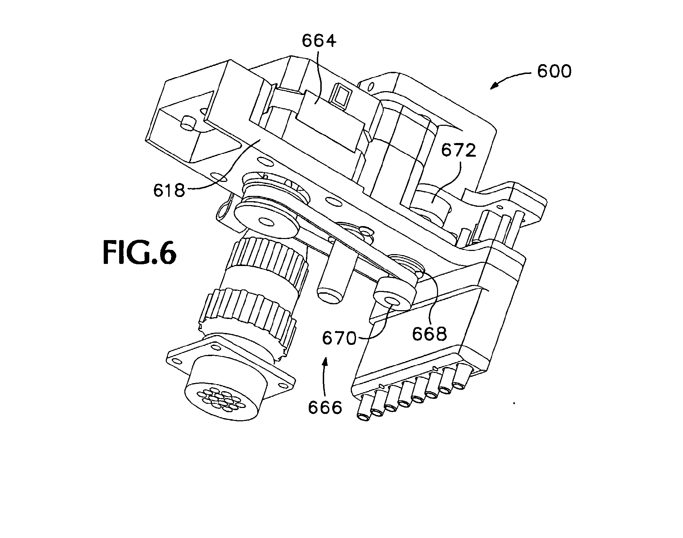

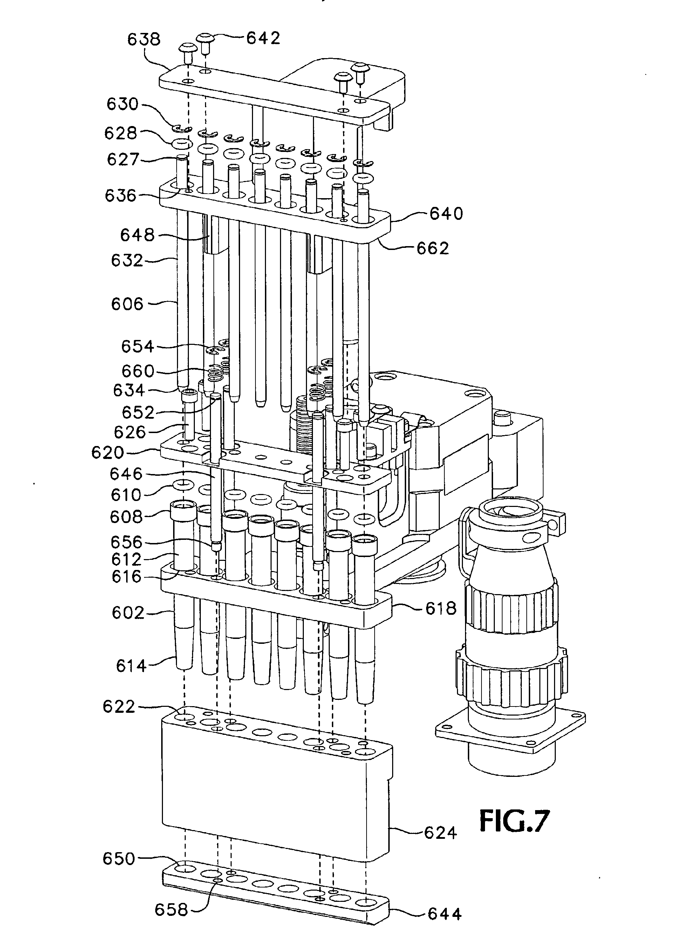

Figures 6 and 7 show details of an exemplary dispense assembly 600, illustrating portions of the dispense assembly used to pick up and dispense fluids. This assembly includes components for forming an automated multichannel air-displacement pipettor, including pipetting elements, an ejection system, and an actuator.

Dispense assembly 600 includes a plurality of pipettor elements, each having a tubular barrel 602 with an inner bore and a cylindrical piston 606 sized to fit snugly but slidingly within the inner bore.

The barrels generally comprise any mechanism having an aperture configured to receive a piston for drawing or dispensing fluid. Barrels 602 may have a variable exterior dimension, with a widened upper end 608 configured to receive a corresponding barrel O-ring 610, a substantially cylindrical midsection 612, and a tapered or narrowed lower end 614 configured to receive a pipette tip (not shown). The barrels may be mounted for support through corresponding apertures 616 in a base assembly 618, with the upper end of each barrel and the corresponding barrel O-ring sandwiched between the base assembly and a barrel retainer plate 620 that is positioned above the base assembly. The barrels may be further mounted through corresponding apertures 622 in a base assembly extension 624, with the base assembly extension positioned below the base assembly and around the midsections of the barrels so that only the lower ends of the barrels are exposed. The barrel retainer plate, base assembly, and base assembly extension may be joined together using suitable fastening means, including removable means, such as screws 626, which facilitate repair by allowing easy disassembly and reassembly.

The pistons generally comprise any component configured to fit within the aperture of a corresponding barrel to draw or dispense fluid, including air-displacement and positive-displacement pistons. Pistons 606 may have a variable exterior dimension, with a notched upper end 627 configured to receive a corresponding piston O-ring 628 and locking E-ring 630, a substantially cylindrical midsection 632, and a narrowed lower end 634. The pistons may be mounted for support through corresponding apertures 636 in a piston support plate 638, with the notched upper end of each piston and the corresponding O-ring and E-ring sandwiched between the piston support plate and a piston retainer plate 640 that is positioned above the piston support plate. The piston retainer plate and piston support plate may be joined together using suitable fastening means, such as screws 642, which again facilitate repair.

Dispense assembly 600 also includes an ejection system, which generally comprises any mechanism for removing pipette tips or other dispense elements from the dispense assembly, particularly after use. The ejection system may include a stripper plate 644, a set of ejection pins 646, and a corresponding set of actuator tabs 648. The stripper plate generally comprises any mechanism for engaging and removing a pipette tip from a corresponding barrel, preferably by contacting an upper portion of the pipette tip and pushing it off the barrel. Here, stripper plate 644 is an elongate plate having a plurality of apertures 650. The plate is configured to mount below base extension 624 such that the lower ends of the pipettor barrels extend through the apertures to receive pipette tips. The ejection pins generally comprise any mechanism for engaging and moving the stripper plate. Here, ejection pins 646 are substantially cylindrical, like the pistons, with a notched upper end 652 configured to receive an E-ring 654 and a narrowed lower end 656 configured to engage a corresponding indentation 658 in the stripper plate. The ejection pins fit through corresponding apertures in barrel retainer plate 620, base assembly 618, and base extension 624, with the notched upper end and a biasing spring 660 secured to the piston retainer plate by the E-ring, and the narrowed lower end in contact (and preferably joined) with the stripper plate. The actuator tabs generally comprise any mechanism for reversibly moving the ejection pins, particularly by pushing on or adjacent the upper ends of the ejection pins. Here, actuator tabs 648 are downwardly directed members extending from a bottom surface 662 of the piston retainer plate.

Dispense assembly 600 also includes an actuator, which generally comprises any mechanism for reversibly moving the pistons and/or ejection pins, for example, to load and/or dispense fluid, or to load and/or remove dispense elements, respectively. The actuator may comprise a single system configured to move both the pistons and the ejection pins, as here, or a plurality of systems configured independently to move either the pistons or the ejection pins, or subsets or combinations thereof. Suitable actuators may include linear actuators, rotary actuators, and combinations thereof, among others, as described below in the context of the dispense assembly driver. Here, the actuator includes a rotary motor 664, a pulley system 666, and a linear drive screw 668. The motor, pulley system, and a first end 670 of the drive screw are mounted to base assembly 618, adjacent barrels 602. A second end 672 of the drive screw is mounted to piston retainer plate 638. In use, the motor turns the pulley system, the pulley system turns the drive screw, and the drive screw raises or lowers the piston retainer, depending on the direction of the motor. Over a first range of motion, the piston retainer moves only enough to raise and lower the pistons, enabling the pipettor elements to load or dispense fluid. Over a second range of motion, corresponding to what would be negative dispense volumes, the piston retainer moves enough so that the actuator tabs engage the ejection pins, pushing the stripper plate down to remove the pipette tips. The biasing springs (or any other suitable biasing mechanisms) ensure that the stripper plate returns to its disengaged position as the piston retainer is moved back toward positive dispense volumes.

Tip loading and unloading may be partially or fully automated. Pipette tips may be loaded onto a respective barrel by moving pipette tips and the dispense assembly to a common exchange position and then lowering the dispense assembly until the tapered lower ends of the barrels contact an appropriate set of pipette tips, which then move up the ends until they are frictionally secured. The distance, rate, and/or force by which the dispense assembly is lowered to load pipette tips may be fixed or variable, depending in part on the type and number of tips to be loaded. For example, the rate by which the dispense assembly is lowered may be reduced as the number of tips to be loaded is reduced. If the reduction in rate is linear, a dispense assembly configured to hold up to eight tips may be lowered at a first rate to pick up eight tips, at one-half the first rate to pick up four tips, and at one-eighth the first rate to pick up one tip, among others. Such a reduction in rate may lead to a reduction in engagement force and may be accomplished using various methods, for example, by proportionally reducing the current to the dispense actuator. In particular, such a reduction may be accomplished in the exemplary embodiment by current/speed reduction of the stepper motors associated with the dispense actuator. Pipette tips may be unloaded as described above by positioning the dispense assembly in an appropriate position (e.g., over an empty rack position) and then moving the piston retaining plate until the actuator tabs engage the ejection pins and the ejection pins push the stripper plate until the pipette tips are pushed off the barrels. The dispense assembly may be "re-homed" after pipette tips are loaded or unloaded, meaning that the assembly is returned to its resting position prior to any subsequent operation.

The dispense assembly may include one or more pipettor elements, air displacement or otherwise, depending on pipetting strategy. For example, the pipettor may include a linear array of 8, 16, or any other number of appropriately spaced pipettor elements to correspond to a single row of a 96-well, 384-well, or any other number of well microplate, respectively. The pipettor also may include a linear array of 12 or 24 appropriately spaced pipettor elements to correspond to a single column of a 96-well or 384-well microplate, respectively. The pipettor also may include a number and arrangement of pipettor elements to correspond to a portion of a row or column, or two or more rows or columns, or another type of sample holder. The dispense assemblies may be easily interchangeable on the dispense assembly driver to accommodate microplates and other sample holders with different numbers and/or densities of wells.

The pipettor may be configured to interact with a rack of dispense elements, such as a rack of pipette tips, as described below. The spacing between dispense elements in the rack typically will correspond to the spacing between pipettor elements in the pipettor.

### 2) Dispense assembly driver

The dispense assembly driver generally comprises any mechanism or system for reversibly moving the dispense assembly along at least a single preferably vertical axis, so that the dispense assembly can be moved between a resting position and a dispensing position. The driver may include a single linear actuator or a combination of linear and/or rotational actuators. Suitable linear actuators include a positioning table, a rodless cylinder, a robot module, an electric thrust cylinder, a pneumatic cylinder, a linear motor, a linear voice coil, and a solenoid, among others. Suitable combinations include a rotary actuator, such as a rotary motor, stepper motor, gear motor, gear reducer, manual hand crank, or micrometer, among others, and a mechanism for converting rotary motion to linear motion, such as a belt drive, ball screw, or Acme screw, among others. The driver may use feedback mechanisms to enhance the positioning and/or motion profile of the dispense assembly.

Figure 5 shows an exemplary dispense assembly driver 506, which includes a rotary motor 508 coupled through a series of pulleys and belts to the dispense assembly to move the dispense assembly up and down along two vertical support guides 510. The motor is directly connected to a relatively small first pulley 512. The first pulley is connected through a horizontally oriented reduction belt 514 to a relatively large second pulley 516 positioned at a first end 518 of an idler block 520. The second pulley is connected through a horizontally oriented idler reduction shaft 522 associated with the idler block to a relatively small third pulley 524 positioned at a second end 526 of the idler block. The third pulley is connected through a vertically oriented drive belt 528 to a passive fourth pulley (not shown), with the third and fourth pulleys positioned approximately at opposite ends of the vertical guide shafts. Finally, the drive belt is connected to a dispense assembly support member 530 that supports the dispense assembly and that is slidingly mounted using two apertures 532 and two associated bearings 534 to the vertical support guides. The support guides generally comprise any mechanism for directing the motion of the dispense assembly, and may include one, two, or three or more elements, such as the two cylindrical shafts shown here. The motor, idler block, fourth pulley, and vertical support guides are mounted to portions of the housing, as shown in Figure 4, such that the reduction belt, idler reduction shaft, and drive belt are oriented at approximately right angles to one another.

The dispense assembly driver can move the dispense assembly up or down simply by reversing the rotation direction of the motor. The dispense assembly generally is moved down to pick up or deposit pipette tips and reagents, and to position itself for dispensing above a sample holder. The dispense assembly generally is moved up after picking up or depositing pipette tips and reagents, and after dispensing into a sample holder. The dispense assembly generally is oriented so that the pipettor elements remain aligned with the sample holder and components of the material exchange stations. However, if desired, the dispense assembly, sample holder, and/or components of the exchange stations may be realigned, for example, using mechanisms described in WO 00/66269, published November 9, 2000. These realignment mechanisms allow, for example, the dispense assembly to be offset along an axis defined by a linear array of dispense elements, so that an eight-channel dispense assembly for a 96-well microplate may be used to dispense into a 384-well microplate by combining a first dispense into a first set of eight wells, an offset, and a second dispense into the second set of eight wells.

The belts and pulleys in the dispense assembly driver may be selected and/or arranged to provide several advantages. First, the coupling of the smaller first pulley to the larger second pulley in the reduction belt system creates mechanical advantage, reducing the load on the motor, because a single turn of the smaller drive pulley leads only to a partial turn of the larger pulley. Second, the turn-for-turn coupling of the larger second pulley to the smaller third pulley through the idler reduction shaft enhances the accuracy of the motor, because a given action of the motor and hence the first pulley leads only to a reduced action of the third pulley, enabling more accurate positioning and changes in positioning. Third, the belts and pulleys may include interlocking notches, or be replaced by chains and gears, to reduce belt slippage and any associated error. If desired, the tension in the reduction belt, drive belt, and/or other belts in the fluidics module may be maintained using a tensioning spring, for example, attached to an end of the respective belt. In the exemplary embodiment, the tip load pressure is determined in part by a highly rigid and adjustable belt tensioning system that controls z-axis motion.

### C. Material Exchange System

The material exchange system generally comprises any system or mechanism for exchanging materials such as pipette tips and reagents with a dispense system.

Figure 5 shows a perspective view of an exemplary material exchange system, 552, which may include one or more carriages 554 for supporting one or more material holders 556 and one or more carriage drivers 558 for moving the carriages among different positions, such as the input/output, resting, and exchange positions described above. These carriages and carriage drivers may be the same or different, depending in part on their intended uses. For example, an upper carriage may be larger and/or taller to accommodate a rack for pipette tips, and a lower carriage may be smaller and/or shorter to accommodate a microplate for reagents.

Exemplary carriages and carriage drivers are described below. The exemplary system allows interplate transfers with a minimum of movement, specifically, two x-axis movements and one z-axis movement. Suitable alternatives are described in U.S. Patent No. 6,159,425, issued December 12, 2000.

### 1) Carriage

The carriage generally comprises any mechanism or system for supporting materials as the carriage driver moves them to and from an exchange station. The carriage may be capable of receiving and supporting a material holder such as a pipette tip tray, fluid reservoir, or microplate. The carriage also may be capable of automatically securing the material holder within the carriage in a defined and reproducible position and orientation, and releasing the material holder prior to its removal.

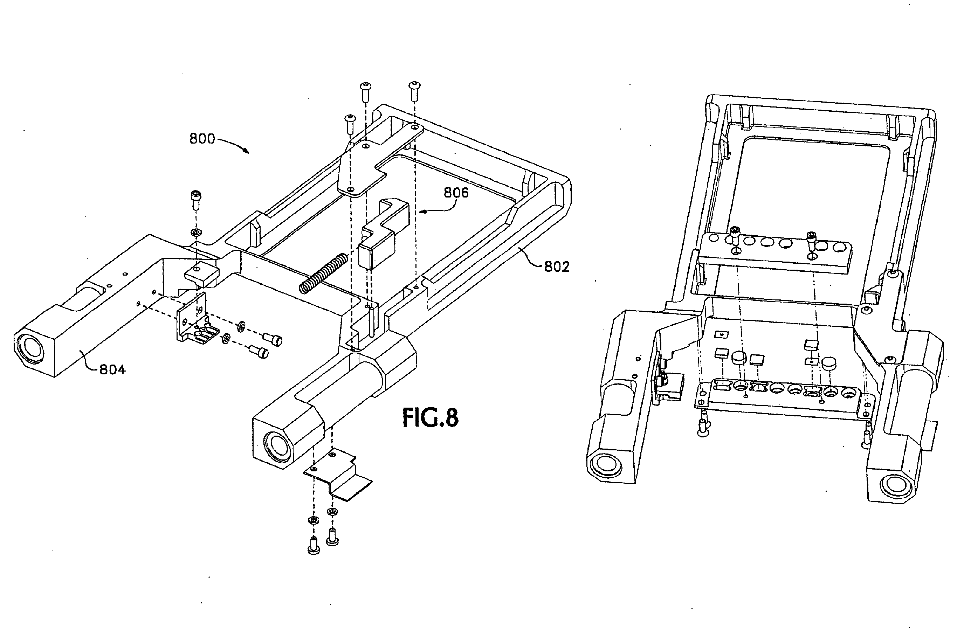

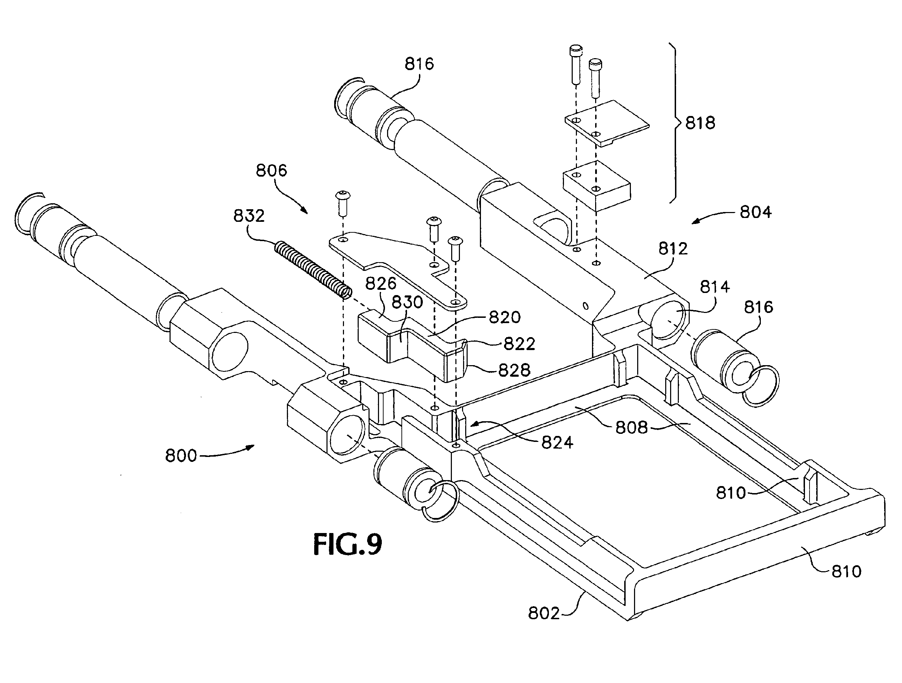

Figures 8 and 9 show details of an exemplary carriage 800, which includes a carriage body 802, a carriage support 804, and an automatic material-holder positioning mechanism 806.

The carriage body generally comprises any mechanism for supporting a material holder. Carriage body 802 includes a shelf structure 808 and an associated frame structure 810 for supporting and securing the material holder. The shelf structure may be configured to support a bottom of the material holder, and the frame structure may be configured to secure one or more sides of the material holder. The shelf and/or frame structures may be continuous, as shown, or they may be discontinuous, including pins, pegs, or other support mechanisms.

The shelf and frame structures collectively may form a transport cavity shaped and sized to support a particular type of material holder, such as a standard pipette tip rack or microplate. Here, the cavity is approximately rectangular, with a size slightly larger than the expected peripheral dimension of a microplate (e.g., with a major dimension X of about 130 millimeters, and a minor dimension Y of about 90 millimeters). A slight oversizing may facilitate robotic and/or manual placement.

The carriage body may be open along a portion of its bottom and/or sides to reduce mass and/or to facilitate the robotic placement and/or removal of material holders. In particular, if at least a portion of the bottom and one side are open, a material holder transfer device may gently place a material holder onto the carriage body by moving into or over the transport cavity on the open side and then moving down through the open bottom.

The carriage support generally comprises any mechanism for supporting a carriage body and attaching it to a carriage driver. Carriage support 804 includes two elongate members 812 that extend parallel to one another from adjacent corners of the carriage body. Each member includes a pair of circular apertures 814 configured slidingly to engage a corresponding substantially cylindrical horizontal support guide, as described below. The carriage preferably is mounted so that the members extend away from the input/output position, for example, parallel to a major axis of the transporter body. Each member also may include a bearing 816 such as a linear bearing to facilitate movement of the carriage along the support guides. At least one member also may include an attachment structure 818 such as a belt keeper configured to join the member and thus the carriage to a drive mechanism or a portion thereof.

The automatic material holder positioning mechanism generally comprises any mechanism for automatically positioning and/or securing a material holder in a carriage. Positioning mechanism 806 includes an elongate pusher 820 having an engagement portion 822 positioned inside a corner 824 of the carriage body adjacent the elongate member and an actuator portion 826 positioned outside the corner, within or adjacent the member. The engagement portion may include a surface such as a beveled engagement surface 828 configured to contact and push a corner of a material holder. The actuator portion may include a surface such as a flat actuator surface 830 configured to contact and be pushed by a portion of the housing. A biasing element such as a biasing spring 832 may be positioned within or adjacent the pusher to bias the pusher toward the material holder. Here, the positioning mechanism and the attachment structure are positioned on opposite sides of the carriage body; however, these mechanisms also may be positioned on the same side of the body, or on both sides of the body, if there are two or more of a given mechanism.

The positioning mechanism may be used to secure and/or release a material holder. To secure a material holder, the carriage may be moved from an exchange or resting position generally inside the fluidics module to an input/output position generally outside the module. As the carriage body approaches the input/output position, a door associated with the housing may open, and the actuator surface may contact and be stopped by a portion of the housing, pulling back the pusher. A material holder then may be positioned generally anywhere in the transport cavity, as long as the bottom of the material holder is supported by the shelf structure. Next, the carriage may be moved from the input/output position back toward the resting or exchange position. As the carriage leaves the input/output position, the actuator surface gradually will lose contact with the housing, and thus the pusher gradually will engage the material holder. In particular, the beveled surface of the pusher will engage a corner of the material holder, pushing it into an opposite corner of the transport cavity where it may be precisely and reproducibly positioned. To release a material holder, this process may be reversed.

### 2) Carriage driver

The carriage driver generally comprises any mechanism or system for reversibly moving the carriage along at least a single preferably horizontal axis, so that the carriage can be moved between an input/output position and an exchange position. The driver generally may include any of the mechanisms described above for the dispense assembly driver, including linear actuators, rotary actuators, or a combination thereof.

Figure 5 shows an exemplary carriage driver 558, which includes a rotary motor 560 coupled through a pair of pulleys and a single horizontally oriented drive belt 562 to the carriage to move the carriage back and forth along two horizontal support guides 564. Specifically, the motor is directly connected to a first pulley 566. The first pulley is connected through the drive belt to a passive second pulley 568, with the first and second pulleys being positioned approximately at opposite ends of the horizontal support guides. Finally, the drive belt is connected to support portions of the carriage via an attachment structure 570, as described above in the context of Figures 8 and 9.

The carriage driver can move the carriage back and forth simply by reversing the rotation direction of the motor. The carriage generally is moved toward the exchange position and the dispense assembly to provide new materials such as clean pipette tips and reagents, and to receive expended materials such as used pipette tips. The carriage generally is moved toward the input/output position and away from the dispense assembly to receive new materials for conveyance to the dispense assembly and to allow retrieval of used materials.

In alternative embodiments, the carriage (or a plurality of stacked carriages) may move between an input/output position and an exchange position by alternative mechanisms, such as rotation rather than translation, or a combination of rotation and translation. For example, in a purely rotational embodiment, the sample carriage may comprise a portion of a disk configured to rotate about a central disk axis between input/output and exchange positions. Pure rotation is quasi-one-dimensional motion and may occur over any angle or arc length large enough to allow input/output at the input/output station and material exchange at the exchange station, without interrupting the operation of the dispense system or any other components of the material exchange systems.

### II. Analysis Module

The analysis module generally comprises any mechanism or system for analyzing a sample, including qualitative analysis (to determine the nature of the sample and/or its components) and/or quantitative analysis (to determine the amount, relative proportions, and/or activity of the sample and/or its components).

The analysis module may include components for generating and/or detecting light, and for transmitting light to and/or from a sample. These components may include (1) a stage for supporting the sample at one or more analysis or examination sites, (2) one or more light sources for delivering light to the sample, (3) one or more detectors for receiving light transmitted from the sample and converting it to a signal, (4) first and second optical relay structures for relaying light between the light source, sample, and detector, and/or (5) a processor for analyzing the signal from the detector. Module components may be chosen to optimize speed, sensitivity, and/or dynamic range for one or more assays. For example, optical components with low intrinsic luminescence may be used to enhance sensitivity in luminescence assays by reducing background. Module components also may be shared by different assays, or dedicated to particular assays. Suitable apparatus are described in U.S. 09/337,623, filed June 21, 1999; U.S. 6,097,025, issued August 1, 2000; and Joseph R. Lakowicz, PRINCIPLES OF FLUORESCENCE SPECTROSCOPY (2nd Ed. 1999).

The analyzer module preferably includes top and bottom optics, enabling a variety of measurement modes, including: (1) top illumination and top detection, or (2) top illumination and bottom detection, or (3) bottom illumination and top detection, or (4) bottom illumination and bottom detection. Same-side illumination and detection, (1) and (4), is referred to as "epi" and is preferred in photoluminescence and scattering assays. Opposite-side illumination and detection, (2) and (3), is referred to as "trans" and is preferred for absorbance assays. Generally, top optics may be used with any sample holder having an open top, whereas bottom optics may be used only with sample holders having optically transparent bottoms, such as glass or thin plastic bottoms. Clear bottom sample holders are particularly suited for measurements involving cells and analytes that accumulate on and/or that bind to the bottom of the holder.

The analysis module may implement one or more methods, such as spectroscopic and imaging methods, among others, especially those adaptable to high-throughput analysis of multiple samples. Spectroscopic methods generally comprise any method for assaying the interaction of light with a sample, and particularly for monitoring and interpreting properties of the light that are changed by the interaction. Suitable spectroscopic methods include luminescence (including photoluminescence, chemiluminescence, and electrochemiluminescence), absorption, light scattering, circular dichroism, and optical rotation, among others. Suitable photoluminescence methods include steady-state and/or time-resolved measurements of fluorescence intensity (FLINT), fluorescence polarization (FP), fluorescence resonance energy transfer (FRET), fluorescence lifetime (FLT), total internal reflection fluorescence (TIRF), fluorescence correlation spectroscopy (FCS), and fluorescence recovery after photobleaching (FRAP), and their phosphorescence and higher-order-transition analogs, among others. Imaging methods generally comprise any method for visualizing a sample and/or its components, including static and real-time imaging, among others. Suitable methods are described in the following materials: Publication No. WO 00/06991, published February 10, 2000; and Joseph R. Lakowicz, PRINCIPLES OF FLUORESCENCE SPECTROSCOPY (2nd Ed. 1999).

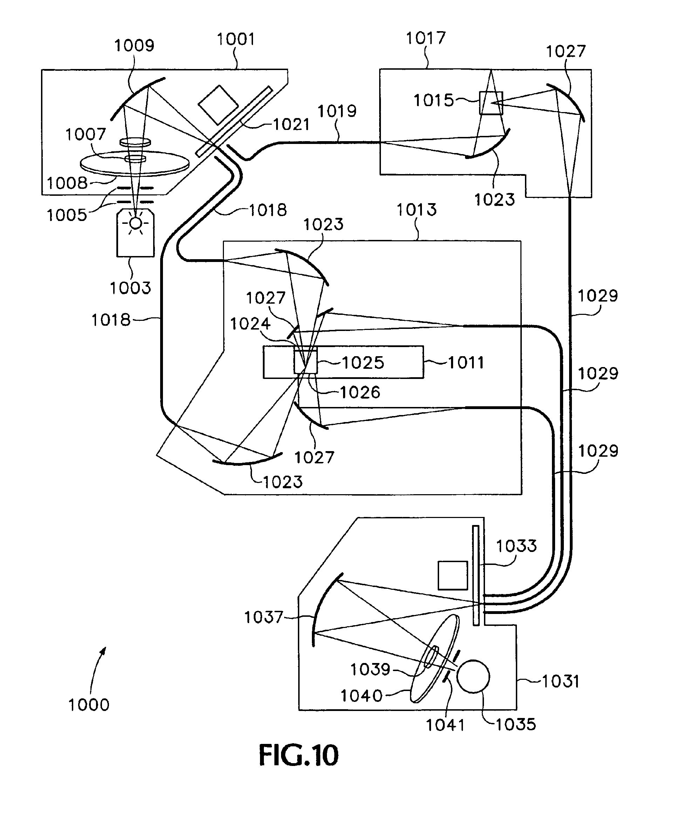

Figure 10 schematically shows the principal components of an analysis module 1000 constructed in accordance with aspects of the invention. The analysis module may be combined with other modules, such as fluidics and/or transport modules, and may itself be constructed of subassembly modules.

A light source subassembly 1001 within system 1000 generates illumination of a predetermined wavelength, or range of wavelengths. Preferably the source for subassembly 1001 is a broadband source, such as a xenon flash lamp 1003. The light from lamp 1003 may pass through one or more apertures 1005 to condition the light before passing through an optical filter 1007 mounted in an opening of a filter wheel 1008. The wavelength of light emitted by source subassembly 1001 is determined by a combination of filter 1007, a movable grating 1009, and apertures formed by the input apertures of optical fibers 1019.

The light from source subassembly 1001 is used to illuminate a well 1025 of a multiwell plate 1011 contained within a multiwell plate chamber subassembly 1013 and/or a cuvette 1015 within a cuvette chamber subassembly 1017. Multiwell plate 1011 is retained by a holding fixture. The light from source subassembly 1001 is transmitted to multiwell plate chamber subassembly 1013 or cuvette chamber subassembly 1017 via a selected fiber of optical fibers 1019. Furthermore, the source light can be transmitted either through the open top portions 1024 of wells 1025 or through transparent closed bottom portions 1026 of wells 1025, the selection of which is determined by the particular optical fiber 1019 selected to couple source subassembly 1001 to multiwell plate 1011. An optical shutter 1021 within source subassembly 1001 establishes which of fibers 1019 receives light from source 1003. One or more focusing mirrors 1023 focus the light passing through fibers 1019 into the chamber of interest, such as multiwell plate well 1025 or cuvette 1015.

The light, either from cuvette 1015, top portion 1024 of well 1025, or bottom portion 1026 of well 1025, is collected with optics 1027. The collected light can be emitted luminescence light for a luminescence measurement and/or transmitted light for an absorption measurement, among others. The collected light passes through a selected optical fiber or fibers 1029 to a detection subassembly 1031. When transmitted light is used for an absorption measurement in wells 1025, the preferred configuration is to pass the light first through top portion 1024 of wells 1025, then through the sample materials contained within wells 1025, and finally through the bottom portion 1026 of wells 1025. During absorption measurements, the transmitted light is collected by optics 1027 positioned under multiwell plate 1011. The collected light then is focused onto a selected fiber 1029 for transmission to detector 1035 in detector subassembly 1031. In a first alternative configuration used for absorption measurements, as in the above configuration, the light enters well 1025 through top portion 1024. After the light passes through the sample materials within well 1025, however, it is reflected back by a mirror underneath the sample well (not shown) and collected by optics positioned above the well (not shown). In a second alternative configuration, a detector, preferably a photodiode, is located directly under the well (not shown) and collects the light transmitted through well 1025 and the sample materials contained therein. In a third alternative configuration (not shown), the light enters well 1025 through bottom portion 1026, passes through the sample materials, passes through top portion 1024, and then is collected and focused onto a detector. In this configuration, the detector may either be mounted remotely or be mounted in close proximity to top portion 1024. Further aspects of the top and bottom optics and their use are described below in connection with the transport module.

A shutter 1033 determines which fiber 1029 is monitored by subassembly 1031. The light from a selected fiber 1029 is focused onto a detector 1035 by a movable, focusing grating 1037. Preferably, detector 1035 is photomultiplier tube (*i.e.,* PMT). The light may pass through one or more apertures 1041 to reduce stray light before impinging on detector 1035. The combination of grating 1037, aperture 1041, and a filter 1039 mounted in an opening of a filter wheel 1040 determines the wavelength of light detected by detector 1035.

Grating 1009 allows the excitation wavelength to be varied continuously over a relatively wide wavelength band. Similarly, grating 1037 allows the detection wavelength to be varied continuously over a wide range of wavelengths. In a preferred embodiment, gratings 1009 and 1037 each have a focal length of approximately 100 millimeters, thus allowing excitation subassembly 1001 and detection subassembly 1031 to be relatively compact. As the gratings are preferably holographic gratings with 1200 grooves per millimeter, the dispersion of the gratings with this focal length provides a nominal 10-nanometer bandpass. In a preferred embodiment, the blaze angle of the gratings is 500 nanometers. However, the gratings may be blazed at different angles, thus further enhancing the decoupling of the excitation and fluorescence wavelengths. Preferably the arc of lamp source 1003 is focused onto the entrance aperture of fiber 1019.

Additional aspects of analysis module 1000 are described in U.S. Patent Application Serial No. 09/337,623, filed June 21, 1999.

### III. Transport Module

A transport module generally comprises any mechanism for supporting a sample in a sample holder for fluid dispensing and/or analysis, among others, and for moving the sample from an input/output position to a dispense and/or examination position, among others. Suitable apparatus are described in U.S. Patent Application Serial No. 09/337,623, filed June 21, 1999; Publication No. WO 00/66269, published November 9, 2000; and U.S. Patent No. 6,097,025, issued August 1, 2000.

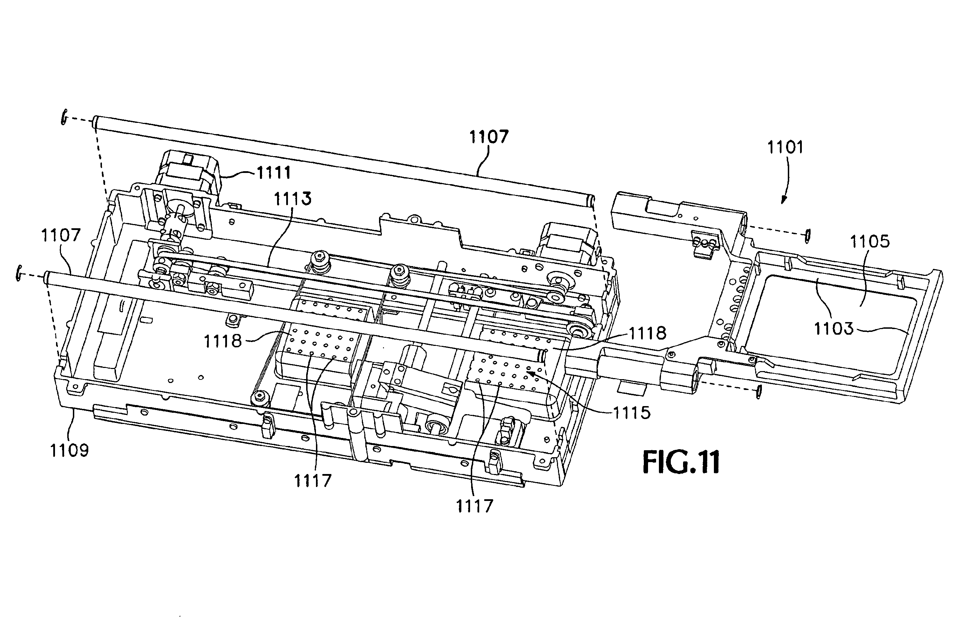

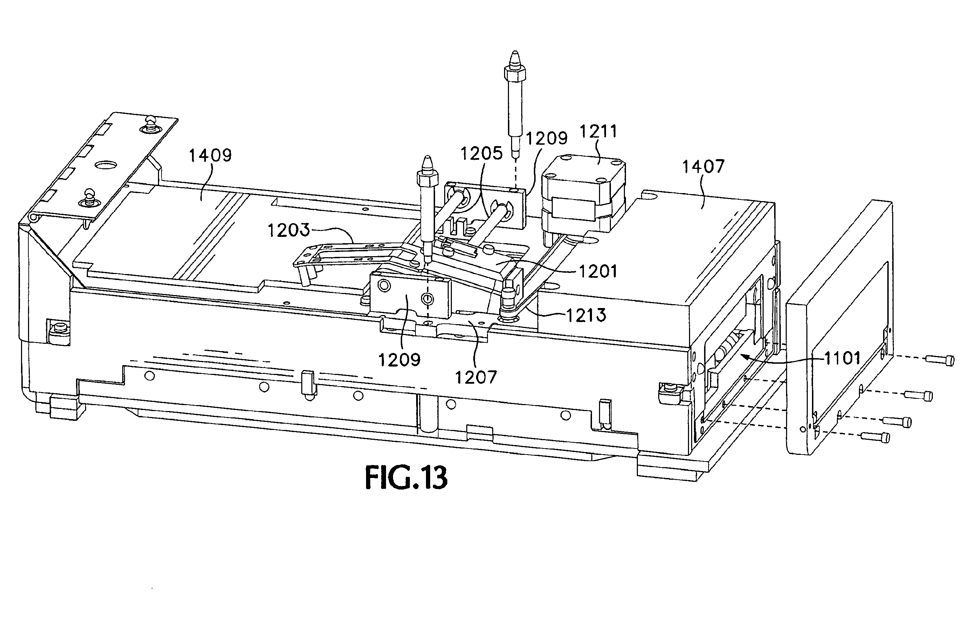

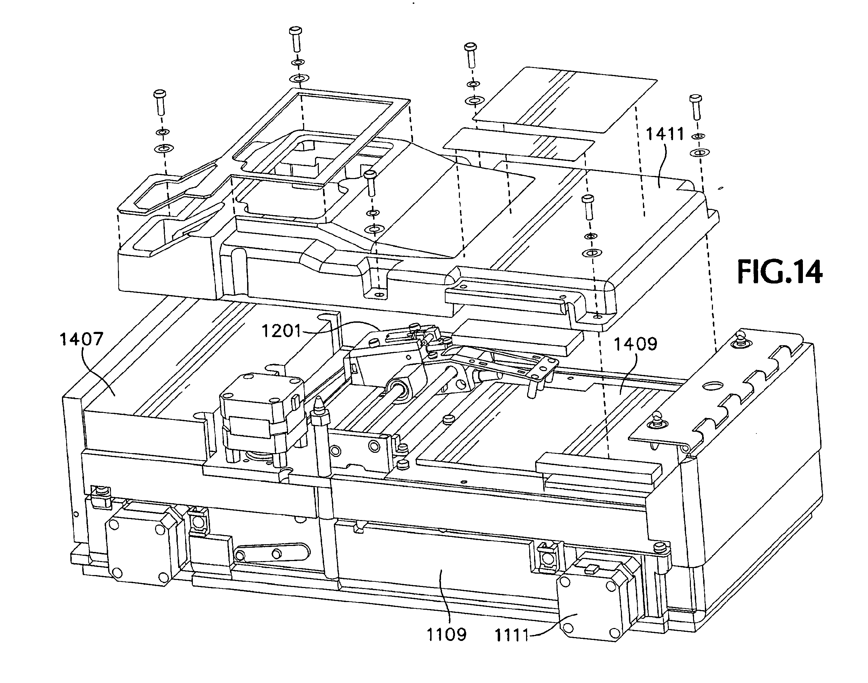

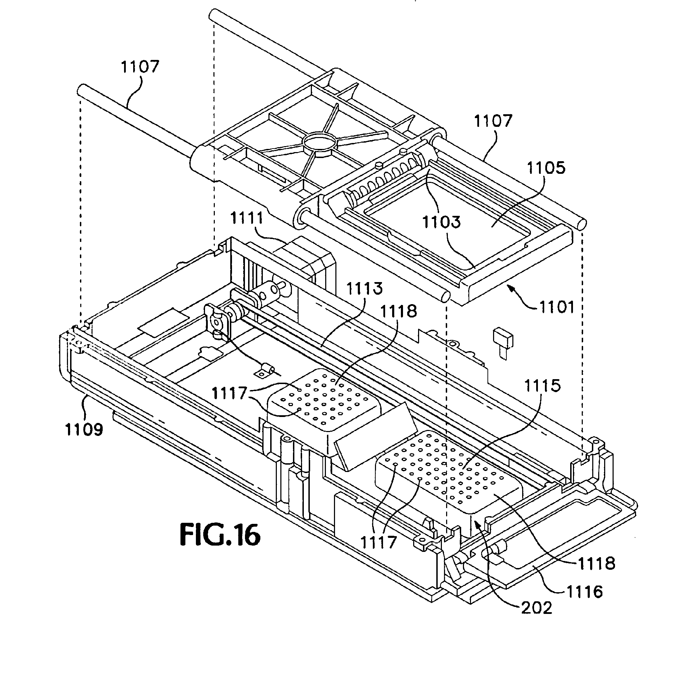

Figures 11-15 show various aspects of a transport module constructed in accordance with aspects of the invention; Figures 16-18 show aspects of a variant of the transport module of Figures 11-15. These aspects include interactions of the transport module with the dispense head of the fluidics module and the top and bottom optics heads of the analysis module. Although in at least one embodiment the system may be used to read a cuvette using a cuvette port, the primary application for this invention is reading multiwell plates. Furthermore the preferred embodiment of the invention is designed to be adaptable to multiwell plates of various configurations (i.e., various quantities and sizes of sample wells, various plate sizes, etc.).

Figures 11 and 16 show a sample-plate holding fixture (or carriage) 1101 designed to accommodate multiwell plates of standard dimensions (e.g., 86 by 129 millimeters). To accommodate other sized plates, an adaptor plate (not shown) is mounted within fixture 1101, the non-standard plate fitting within the adaptor plate. Fixture 1101 supports the multiwell plate or adaptor plate along the edges using a support frame 1103. Thus, an area 1105 immediately under the sample wells of the multiwell plate remains open, allowing a variety of sample measurements to be made that require access to both the upper and lower surfaces of the sample wells. Holding fixture 1101 slides along a pair of railings 1107 that are mounted to a base assembly 1109. A drive motor 1111 moves fixture 1101 and thus the multiwell plate along a first axis parallel to railings 1107 by using a belt and pulley system 1113.

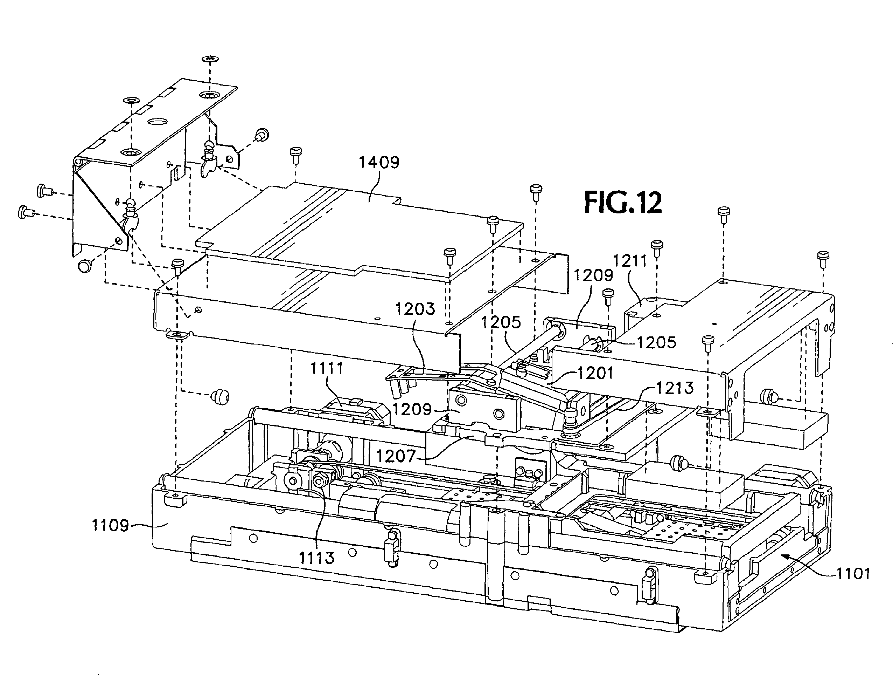

Figures 12 and 13 as well as Figure 17 show an optical scanning assembly 1200 in combination with base assembly 1109. Scanning assembly 1200 allows an optics head 1201 to be scanned along a second axis perpendicular to railings 1107. Thus, scanning assembly 1200, used in conjunction with scanning fixture 1101, allows an optics head 1201 to be scanned in two dimensions, thereby providing a means of analyzing each well of a two-dimensional array of wells within a multiwell plate.

In a preferred embodiment, optics head 1201 includes the optics required to illuminate the sample as well as the optics necessary to gather the emitted light. Optical fibers 119 and 129, although not shown in this illustration, are coupled to optics head 1201 via a strain relief bracket 1203. Optics head 1201 slides along a pair of railings 1205 that are mounted to a bottom assembly plate 1207 via a pair of brackets 1209. A drive motor 1211 and a belt and pulley system 1213 move optics head 1201 along a second axis orthogonal to the first axis.

In a preferred embodiment, scanning motors 1111 and 1211 are both under the control of an internal processor. Typically prior to use, the user inputs the sample plate configuration (e.g., how many wells, plate type, well size, etc.). The user then programs the internal processor to scan the designated sample plate utilizing one of a variety of scan modes. For example, an on-the-fly scanning mode can be used to minimize the amount of time it takes to read a sample plate by eliminating the acceleration and deceleration times. In this mode fixture 1101 and optical scanning head 1201 are scanned in a continuous fashion, for example utilizing a zigzag pattern. Source 1003 is flashed as optics head assembly 1201 passes over each well, thus allowing a single measurement to be made for each well. Alternatively, the internal processor can be programmed to place optics head 1201 over each well for a predetermined period of time, allowing a predetermined number of sample readings (initiated by flashes emitted by source 1003) to be made for each well.

Many fluorescence, luminescence, and absorption measurements are extremely sensitive to outside environmental factors such as temperature. This effect can become an even greater problem as the number of sample wells per multiwell plate increase, leading to variations across the plate.

One approach to overcoming the environmental problem is to simply control the temperature of the reading chamber. This approach, however, may do little to minimize the effects of temperature drop caused by evaporative cooling. A second approach is to combine temperature control with the use of a multiwell plate cover. Although the cover minimizes evaporative cooling and allows for temperature control, it also typically leads to a degradation in instrument sensitivity due to the effects of the lid on the optical system (i.e., increased stray light due to cover scatter, absorption by the lid, etc.).

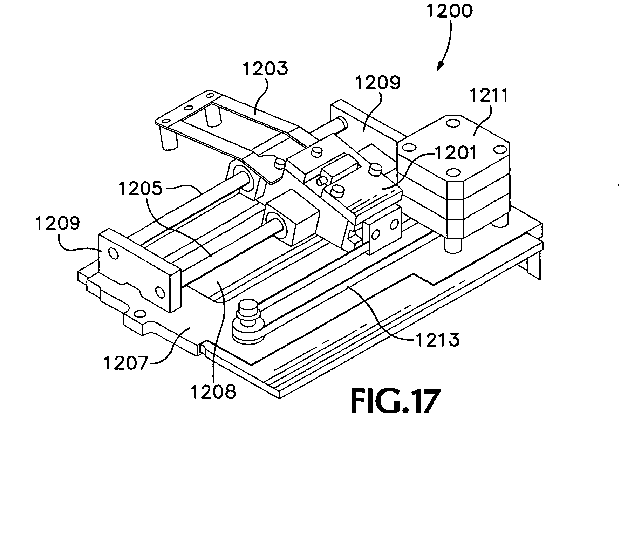

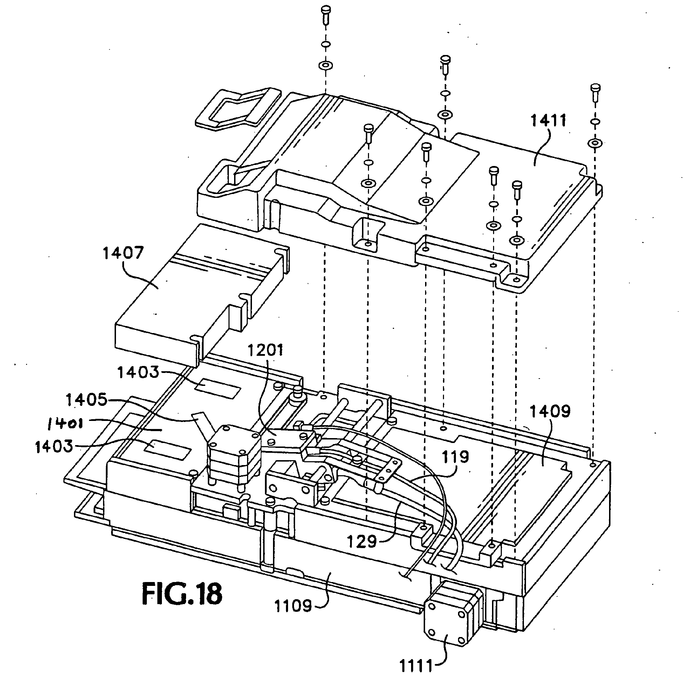

The present invention overcomes these problems through the use of a virtual lid in combination with a temperature control system. In the preferred embodiment, fixture 1101 moves multiwell plate 1011 to an area 1115 between system readings. A lid 1401(Figure 18) is directly above this area. Additional members, for example made of foam, also can be used to further enclose the multiwell plate when it is in area 1115. The bottom plate 1207 of optics head 1201 rests on the tip side of lid 1401 (i.e., opposite to reading chamber 202; Figure 16). An opening 1208 (Figure 17) exists in both bottom plate 1207 and lid 1401, thus allowing excitation and emission light to pass from optics head to the samples contained in the multiwell plates within chamber 202. Preferably the dimensions of opening 1208 are about 1.2 millimeters by 104 millimeters. When fixture 1101 moves multiwell plate 1011 below lid 1401, the lid surface is approximately 10 millimeters above the surface of the multiwell plate and the sides of the multiwell plate are tightly confined. As such, once the multiwell plate is moved into resting position 1115 and the access door 1116 has been closed, the humidity above the plate rises to more than 90 percent, thus reducing evaporative cooling. This system reduces the variations from sample well to sample well within a multiwell plate to preferably less than about ±0.2 °C, and generally to less than about ±0.5 °C.

In the illustrated embodiment, variations in multiwell plate size are accommodated by using various adaptor plates. The adaptor plates not only ensure that the multiwell plate fits support frame 1103, they also can be used to ensure that the top of the multiwell plate is sufficiently close to the surface of lid 1401 to minimize temperature variations between the wells. In an alternate embodiment, the relative distance between lid 1401 and the top of a multiwell plate in fixture 1101 can be optimized by adjusting either the vertical position of the lid or the carriage assembly carrying multiwell plate 1011. In this embodiment, either the lid or the carriage assembly is coupled to a motor, the motor being under the control of the internal processor. Preferably a sensor (e.g., optical sensor, mechanical position sensor, etc.), is used in conjunction with this motor and the internal processor to control the separation between the multiwell plate and lid 1401. Alternatively, the user can input the type of multiwell plate in use and the internal processor can use a look-up table to determine the amount of adjustment necessary for the type of multiwell plate in use.

Figure 18 is an illustration of a portion of a temperature control system. To control the temperature of area 1115 as well as the rest of reading chamber 202, one or more heaters 1403 are attached to various portions of the reading chamber. Preferably heaters 1403 are attached to lid 1401 as shown. One or more temperature monitors (e.g., thermistors) 1405 are used to monitor the temperature of the reading chamber. An outer cover 1407 is coupled to lid 1401 to facilitate temperature control within this area. Other covers such as an internal cover 1409 and an outer cover 1411 enclose the remaining upper portion of the reading chamber, thus further aiding in controlling the temperature of the system. The embodiment of Figures 11-15 is normally of essentially the same construction.

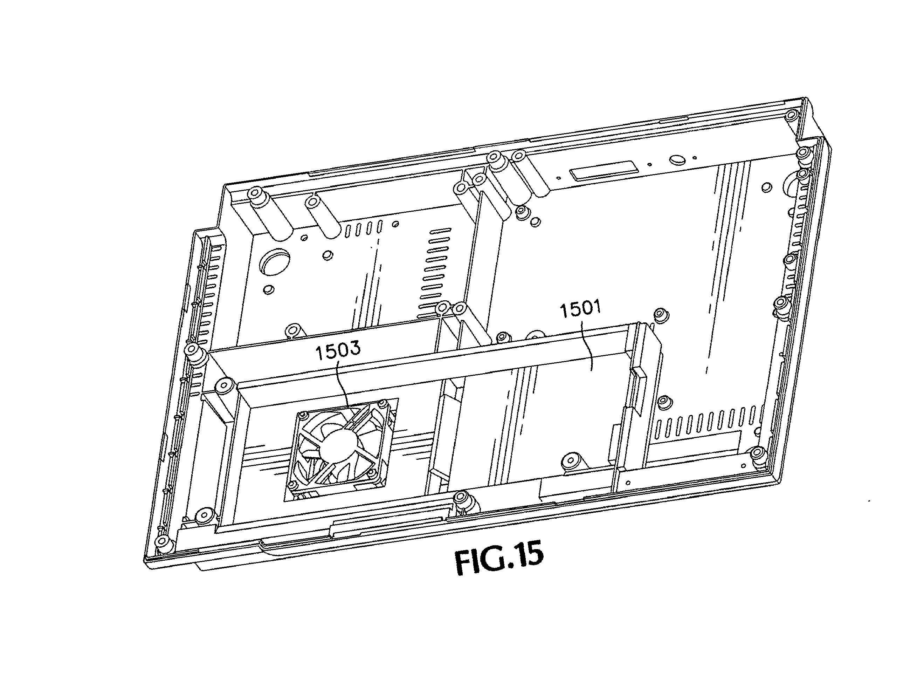

Figure 15 is a perspective view of an air circulation enclosure 1501 that attaches to the underside of base assembly 1109. A fan 1503 forces air through enclosure 1501. The air passes through perforations 1117 within the raised portions 1118 of base structure 1109 as shown in Figure 11. The air circulation system, including perforations 1117, ensure temperature uniformity throughout the reading chamber without causing undue air movement above the multiwell plate.

### IV. Time Tagging

Time tagging," as used herein, refers to methods of tracking a series of measurements based on the collection of time-dependent experimental data, where both the values of the collected data and the time of collection are recorded and utilized. Time tagging methods are helpful in a variety of applications, but are particularly useful for the collection of time-sensitive data, such as when monitoring the progress of a reaction, collecting data for a kinetic analysis, or when the material or composition under investigation is relatively unstable. For example, in a test to determine the absorption properties of a series of materials of slightly differing composition where the absorption properties of the materials do not change with time, time tagging typically offers few advantages. However, in a luminescence investigation where the luminescence of a material is initiated by the addition of one or more reactants, it typically is very helpful to record the time that the luminescence is measured with respect to the time that the reactants were added. Furthermore, if the luminescence properties of a series of compositions are being compared, a valid comparison may require that the time sequence for each individual composition be recorded. As the number of samples under comparison is increased, for example, by using a multi-assay plate with a large number of sample wells, monitoring the reaction kinetics as a function of time becomes increasingly important. Particularly important is the amount of time passed between preparation and characterization of each sample. Also, sequential repetition of the characterization process permits kinetic analysis of the processes occurring in the one, or more, samples contained in the wells of a multi-assay plate.

The instrument system of the invention preferably may be operated in several different time tagging modes, with the associated processing and/or presentation of data performed using a processor. The processor may be internal or external, and it may be dedicated (i.e., separate) or shared (e.g., with an analysis and/or fluidics module). In an exemplary embodiment, a single internal processor is used to control both the dispensing system and the analysis module; however, multiple processors also can be used, as long as certain timing functions are programmable, as described more fully below. Typically, the internal processor is associated with a clock. The associated clock is optionally an internal or an external clock. In some embodiments, the clock associated with the processor provides an actual time (e.g. 2:32 PM); in other embodiments, the clock provides an elapsed or running time. In the latter mode, the clock simply provides the amount of time that has passed between time tags. Preferably, the clock employs time units that are substantially smaller than the time increments needed to dispense a reagent into a well, or perform a luminescence measurement, so that the absolute error in the recorded time tag is relatively unimportant when compared to other sources of uncertainty in the measured data. Preferably, the internal clock utilizes time units on the order of milliseconds, more preferably microseconds.

The internal process may be coupled to a memory and/or one or more data presentation systems. The memory, which may be internal or external to the processor, records the time tags associated with each sample. The memory can be either volatile or non-volatile and utilize any of a variety of well-known media (e.g., electronic, dynamic random access memory, magnetic media, capacitive and charge-storage systems, optical storage systems, etc.) The data presentation system may be a printer, a plotter, and/or a monitor.

The instrument employing the time tagging methods may include both analysis and fluidics modules, as described above. The analysis module preferably is capable of measuring both luminescence and absorption. The fluidics module preferably is capable of dispensing the desired concentrations of each of a plurality of components in the individual sample wells of the multi-assay plate. The instrument system also may include means of mixing the components within the sample wells and means of varying the environment of the multi-assay plate (e.g., temperature, pressure, etc.).

The instrument typically is used with a sample plate, which may be inserted into the fluidics module. The internal processor may be programmed with type, size, and well configuration for the selected plate. This programming provides the system with sufficient information to determine the locations of each of the sample wells within the plate. Alternatively, the system can utilize sensors or other means to locate the sample well positions. The processor is then programmed with the quantities of each of the individual components to be dispensed into the individual sample wells to create the desired compositions.

In some embodiments, the time tagging mode assigns a single time point for an entire sample series. That is, a first time is recorded that is representative of the initiation of the experiment. This time point can represent, for example, the addition of a reactant to each material within the sample series. A second time is then recorded when the sample series is characterized (e.g., by measuring luminescence or absorption). If the sample series is characterized repeatedly over time, each time the series is characterized a time associated with the characterization may be recorded. Thus, each of the materials within the series can be characterized as a function of time. Although this mode of time tagging is adequate for many investigations, it does not take into account variations encountered at the onset of the experiment, for example, due to the addition of the reactants in a sequential rather than simultaneous fashion. Nor does this mode take into account any time lag associated with the measurement process. This time lag can be substantial for a multi-assay plate with a large number of sample wells (e.g., 364 or 1500 sample wells).

Typically, the initiation of each reaction within each sample well can be attributed to a single, controllable event, such as the introduction of a reactant. If the reaction is initiated by the introduction of multiple reactants, often it is possible to simultaneously introduce the reactants, thus still resulting in a single reaction initiation time. Although the present example assumes a single critical reaction initiation point, the present embodiment also can be used with more complicated, multi-critical event reactions. In this case, however, accurate time tagging is employed at each critical stage.

An exemplary multi-well time tagging operation may be conducted as follows. A reaction within a first sample well of the multi-assay plate is initiated at a time equal to x. The time x is recorded by the processor. A reaction within a second sample well is initiated at a second time equal to x + Δ, where Δ is a known time interval. Similarly, a reaction within a third sample well is initiated at a third time equal to x + 2Δ. By spacing the reaction initiations at known, regular time intervals, only the first time, x, must be recorded. After preparation of the sample multi-assay plate has been completed, the multi-assay plate is transported to the analysis module. The composition in the first sample well is then characterized at a time equal to y, with time y being recorded by the processor. The second composition is characterized at a second time equal to y + Δ, the third composition is characterized at a third time equal to y + 2Δ, and each subsequent composition is characterized using the same, known, regular time intervals. Therefore, assuming that the same order for sample preparation and sample characterization is used, this methodology requires that only two times be recorded, a sample preparation start time and a sample characterization start time, together with the time interval used during the experiment. This same methodology can be used with multiple characterization runs simply by recording the start time of each characterization run and maintaining the same order and time intervals.

In a specific example of this embodiment of the invention, a series of two primary component mixtures are first prepared in a multi-assay plate with 364 sample wells. A single reactant (i.e., a third component) is then added to each of the sample wells. The first sample well is prepared at 8:00 AM, with subsequent samples being prepared at 30 second time intervals thereafter. Thus, the 121^{st} sample is prepared at 9:00 AM (i.e., 60 minutes for 120 samples, with a first sample at 8:00 AM). Using the present methodology, if the testing begins at 1:00 PM, the 121^{st} sample will be characterized at 2:00 PM. As a consequence, although only 2 times were recorded, 10:00 AM and 1:00 PM, all of the samples within the multi-assay plate can be directly compared since the time intervals between the preparation of individual samples and the time intervals between the characterization for individual samples is identical. Furthermore, the preparation time and/or the characterization time for any particular sample can be easily calculated using the known start time and the known time interval. Obviously much shorter time intervals may be employed for rapid analysis (e.g., 0.1 seconds or less).

In an alternative embodiment, the fluidics module and the analysis module use two separate and distinct processors. This embodiment offers the same benefits as the previous embodiments as long as the same time interval, Δ, is used by both processors and the initiation times for the two processors can be correlated.

The instrument system of the invention can also be used according to an alternative embodiment to apply time tags to individual samples. Preferably, a time tag is applied at each critical sequence step for each sample within the multi-assay plate. For example, a time tag can be applied at each preparation step as well as during each characterization step. In addition, time tagging can be applied as external variables such as temperature, humidity, gas pressure, gas type, etc. are altered.

This embodiment may be illustrated using an example, as follows. Here, when a reaction of a sample 1 is initiated, a time t₁ is recorded. If necessary, multiple times can be recorded for the preparation of each sample, tagging each step or critical step of the process for each sample. For example, although it may only be necessary to tag the introduction of a reactant, it may be desirable to mark the introduction of each component of the composition, the starting and stopping times of a composition mixing process, etc. After sample 1 is tagged, a time t₂ is recorded for sample 2. This process continues until all of the samples to be prepared have been completed and tagged. The same process is then used to record a time tag, tₙ, for each characterization run made for each sample.

This embodiment provides greater flexibility than the previously described embodiment since it is not necessary to maintain a constant time interval between steps. Thus, if some compositions are more complex than others in the series and therefore take longer to prepare, the time interval can be varied to accommodate the differences in preparation time. Additionally, repetitive characterization runs can be made on select samples of the series instead of having to adhere to the same sequence throughout the test. For example, if the user is testing 100 different compositions, a preliminary characterization scan may show that 90 percent of the samples are not worth further consideration. The remaining 10 samples, however, can then be individually selected and a more thorough characterization performed on each of them. Once an experimental run is complete, the data can either be stored for later retrieval or immediately presented in a user-defined graphical or tabular format (e.g., absorption versus time, fluorescence versus composition versus time, etc.).

In yet another embodiment of the invention, a processor in conjunction with a clock applies time tags to individual samples representing any critical sequence step for each sample, and more typically, representing the luminescence or absorbance of the sample over a designated time period. However, unlike the examples provided above, in this embodiment the collected data are presented as continuous data, or referenced to a single common time point. This data presentation is typically accomplished by performing a mathematical operation on the collected data to determine one or more calculated data values that are intermediate between two measured data points (interpolation) or to determine one or more calculated data values that are before or after the measured data points (extrapolation). Interpolation is typically utilized to obtain a continuous curve from discrete data, or to compare calculated data values between samples at a fixed time point. Extrapolation is typically utilized to determine calculated data at a starting point prior to any actual measured data, but may also be used to determine endpoint data values.

This type of data presentation is particularly useful as it permits the data from individual samples to be compared directly, regardless of the precise timing of the data collection operations. Additionally, most users are accustomed to seeing kinetic data presented as continuous data. Although the mathematical processing required to interpolate/extrapolate the data points collected may be performed by the internal processor, typically the time-tagged data are exported to an external processor, such as a dedicated computer system, to perform the requested data manipulation and optionally the requested data presentation.

Any mathematical algorithm that performs a satisfactory interpolation or extrapolation is an appropriate algorithm for the purposes of the invention. Examples of useful algorithms include linear or polynomial best fit algorithms, particularly quadratic, cubic, and quartic polynomial best fit algorithms. Particularly good results are obtained with polynomial spline functions, more preferably cubic or quartic spline functions. Although the use of a quartic spline algorithm may generate a more accurate fit to the experimental data, in some aspects of the invention the use of a cubic spline algorithm is preferred as the calculated data can typically be determined more rapidly by the processor. In another embodiment of the invention, the algorithm used is a Savitsky-Golay polynomial algorithm.

### V. Examples

This section presents examples that describe without limitation hardware and software for use in running a preferred embodiment of an instrument system and components thereof as described above for preparing and/or analyzing samples, particularly in automatic modes. The preferred embodiment includes a fluidics module for preparing samples, an analysis module for analyzing samples, and a transport module for moving samples into and out of a dispense/examination position.

### Example 1

This example describes customer features provided for an instrument system as described above for preparing and/or analyzing samples.

The instrument includes a fully automated eight/sixteen channel pipettor to add reagents and/or other materials to a sample holder for analysis using the analysis module. Reagents may be obtained from the sample plate and/or from an additional reagent or reservoir plate located in the fluidics module. In fact, the fluidics module may have two or more plate/reservoir/tip rack carriers similar to the plate carrier in the reading chamber of the instrument to provide materials such as pipette tips and reagents.

The instrument may use a variety of dispense and/or analysis strategies, independently or in conjunction with one another. The fluidics module may dispense fluid in an automated fashion before, while, and/or after the analysis module analyzes a sample to enable fast kinetic assays, for example, one or a few wells at a time, or one or more rows or columns at a time, among others. This dispense may be a direct plate-to-plate transfer, for example, one column at a time. This dispense also may be of the same reagent from a reservoir with the same format as a microplate, to all wells in the sample holder, or even multiple reagents at different times. Suitable strategies for coordinating fluid dispensing and sample analysis, such as time tagging, are described in U.S. Patent No. 6,236,456, published May 22, 2001.

The instrument and particularly the fluidics module may perform a variety of fluid transfers. The module may perform inter-plate transfers, for example, from a reagent holder to a sample holder, or a sample holder to a reagent holder, or a reagent holder to another reagent holder, among others. The module also may perform intra-plate transfers, for example, from one or more wells in a given plate to the same wells and/or one or more different wells in the same plate, both within the sample holder and within a reagent holder, allowing a multitude of pipetting functions to be accomplished, including mixing and serial dilutions.

The instrument may sense or allow an operator to define the tips and reagents that are in the associated tip racks and reagent holders, respectively. The tip rack and reagent holders may be full, or they may contain less than a full complement of materials, for example, a diagonal set to enable well-by-well dispensing in addition to column-by-column dispensing. A diagonal set may enable column-by-column dilution and, perhaps more importantly, well-by-well fast kinetic reading, without time tagging.

### Example 2

This example describes recommended protocols for defining a pipetting operation for an instrument system as described above for preparing and/or analyzing samples. These protocols involve defining a source and destination plate, which may be a reagent holder and sample holder for inter-plate transfers, or the same reagent or sample holder for intra-plate transfers. The instrument may include software that allows an operator to define a custom pipetting protocol and/or to select from among a set of standard protocols, for example, pipetting a single reagent into all wells without manually defining the process one column at a time, or a complete plate-to-plate transfer, synchronized with column-by-column reading of the plate.

The following outlines describe procedures for (A) defining formats, and (B) defining a series of pipetting events.

### A. Define formats (automated via plate selection menu)

1) Define tip rack format (e.g., 96, 384). Eight or sixteen channel head will be installed.
2) Define reagent (or drug) plate format (e.g., microplate, trough, etc.).
3) Define tip column format, if less than full complement. Load pressure will be adjusted based on number of tips installed.
4) Define plate well bottom Z height and cross-section of well (to allow dispense height determination).

### B. Define a series of pipetting events Pn at designated times Tn, setting the properties of each pipetting event

1) Define time to pipette (after begin read).
2) Define volume to aspirate.
3) Define aspirate/dispense rate.
4) Define aspirate height.
5) Define dispense height.
6) Define the source plate and column.
7) Define the destination plate and column.
8) Define the tip column.

### Example 3

This example describes hardware features of a fluidics module for an instrument system as described above for preparing and/or analyzing samples. The fluidics module is an eight/sixteen channel pipetting system that can (1) pick up pipette tips from a tip rack on an upper carrier, (2) aspirate and dispense in plates or troughs in either the lower carrier in a fluidics module or the plate carrier in an analysis module, a well or a column at a time, and (3) return the used pipette tips to the same tip rack from which they were removed. The components of the system are actuated with stepper motors that are indexed with optointerrupts.

The following tables describe preferred values for various parameters.

| **Parameter** | **Step Calibration** | **Opto Position** | **Range** | **Speed** |
|---|---|---|---|---|
| Pipettor volume V | 0.05 µL/step | 0 µL | -30 to 250 µL | 1 to 200 µL/s |
| Pipettor Z axis | 615 microsteps/mm | 00 mm | | |
| Tip carrier Xa axis | 210 microsteps/mm | Open/closed | | |
| Plate carrier Xb axis | 210 microsteps/mm | Open/closed | | |

| **Function** | **Z Position** | **Comments** |
|---|---|---|
| Tip load clear (Z home) | 0 mm | |
| Tip load | -46 mm | |
| Reagent plate clear | -56 mm | |
| Reagent plate aspirate | -107 mm | + well bottom height + aspirate height volume/cross-section (well) |
| Assay plate clear | -166 mm | |
| Assay plate dispense | -191 mm | + well bottom height volume/cross-section (well) |

### A. Temperature / Humidity Control

The temperature and humidity of the fluidics module may be controlled using various mechanisms. Temperature may be controlled using two control loops, one to heat the fluidics module structure, independent of the analysis module, and one to heat the pipettor head. Motors may be energized with reduced current when not in use to reduce heat buildup. Humidity may be maintained by evaporation containment in the fluidics module to at least about 90% above the plate.

### B. Channel Head Identification

The pipettor head may be selected so that the number and spacing of pipette channels corresponds to the number and spacing of wells in a single row of a 96-well or 384-well microplate, among others. Thus, a pipettor head having eight channels separated by 9 millimeters may be used with a 96-well plate, and a pipettor head having sixteen channels separated by 4.5 millimeters may be used with a 384-well plate, among others. The identity of the pipettor head may be signaled to a controller by a pipettor head connector, for example, using an additional wire connecting the pipettor head to the controller. The controller may use mismatch between the pipettor head configuration and the sample holder configuration as an error condition, for example, sending an error message if a 384-well plate is selected with a 8-channel head installed.

### C. Calibration of Fluidics Module Positions

The fluidics module is designed to be interchangeable from instrument to instrument without recalibration. The carriages and Z-axis have three offsets that may be manually determined and indexed off a mounting flange of the module or automatically determined using a tool and firmware hooks. The well bottoms in a sample plate having an unknown format may be found as follows: (1) remove power from the Z axis, (2) allow the head with tips loaded to settle in the assay plate, (3) re-energize the motor, and (4) count the steps to the optointerrupt, establishing a new Z-offset, within limits.

### Example 4

This example describes operational features for coordinating fluidics and analysis modules for an instrument system as described above for preparing and/or analyzing samples. Modules may be linked to one another and/or to a central processor using any suitable mechanism, including a serial port. To reduce communication during analysis, all pipetting events are specified and transmitted to the fluidics module before read operations are begun. The fluidics module checks the status of the instrument and ensures that the correct pipettor head is in place before pipetting.

The following outline describes a series of coordinated dispensing and reading steps. The first two steps cover the minimum requirements for single-column operation. The third step applies if the pipetting protocol is dispensing while the instrument is idle.
1) Make an inquiry to synchronize time. Pipetting event timing is specified based on time after beginning a kinetic read.
2) During a kinetic read, if it is a single column read, there is little possibility that the incorrect assay plate column will be in place, but before pipetting first check STATUS and COLUMN and issue a HOLD.
3) If multiple columns are being read, and multiple columns are being dispensed, the dispense events must be carefully coordinated. In this case, a COLUMN XX REQUEST is sent to the instrument, and the instrument then notifies the fluidics module with a COLUMN XX AVAILABLE when this column is reached during the read. The exact time of pipetting is recorded for use during any subsequent analysis.

### Example 5

This example describes programming features of a fluidics module for an instrument system as described above for preparing and/or analyzing samples. These features may be implemented using software and/or firmware, among others. Here, software denotes programs, routines, and symbolic languages that control the functioning of hardware and direct its operation, and firmware denotes programming instructions that are stored in a read-only memory unit rather than being implemented through software. The programming features allow the fluidics module to be controlled in a simple, flexible, and independent manner.

The following outlines describe and define a series of pipetting events, where A-D include higher-level commands, and E-I include lower-level commands.

### A. Format Setup - common to all pipetting events for an experiment

1) Reagent plate column spacing (Rxpos)
2) Tip column spacing (Txpos)
3) Reagent plate well bottom height
4) Assay plate well bottom height
5) Number of tips in each column
6) Well cross-section

### B. Pipetting event specification

1) Event number
2) Event time (after designated start event)
3) Source plate (e.g., reagent or assay plate)
4) Destination plate (e.g., reagent or assay plate)
5) Source column
6) Destination column
7) Volume to transfer
8) Aspirate height
9) Dispense height
10) Mixing cycles
11) Mixing volume

### C. Additional commands - common to all pipetting events

1) Aspirate rate
2) Dispense rate
3) Pipettor air gap
4) Pipettor dead band
5) Pipettor volume calibration
6) Temperature set
7) Tip carrier open/closed
8) Reagent carrier open/closed
9) Shake (e.g., reagent or assay plate)

### D. Coordination commands with instrument

1) Time
2) Status
3) Column
4) Hold column (new)
5) Column request (new)
6) Column available (new)
7) Find well bottom

### E. Intermediate Positioning Commands

1) Move pipettor to carrier (T, R, or A) (clear or dispense/aspirate) position
2) Move tip carrier to column (X)
3) Move reagent carrier to column (X)
4) Dispense
5) Aspirate
6) Home Z-axis
7) Home pipettor piston
8) Load tips
9) Unload tips

### F. Position Calibration Commands

1) Set pipettor Z axis position offset
2) Set tip carrier position offset
3) Set reagent carrier position offset

### G. Lowest-level positioning commands

1) Set pipettor Z position
2) Set tip carrier X position
3) Set reagent plate X position
4) Set pipettor piston position

### H. Prohibited actions - preferred embodiment

1) Pipettor must be at tipclear position any time the tip rack is moved.
2) Pipettor must load and unload tips in the same column.
3) Tip carrier cannot be opened unless all tips are unloaded.
4) Tip carrier and reagent carrier cannot be accessed during a read.
5) Tip carrier and reagent carrier cannot be open at the same time.
6) Pipettor must be at or above reagent plate clear before reagent carrier is moved.
7) Pipettor must be dispensed before tips are unloaded.
8) Summation of aspirates/dispenses must lie in range -30 to 225 µL.
9) Pipettor vol must be in home position before going to 0 Z position.

### I. Boot-Up Sequence

1) Upon power-up, status of installed tips and undispensed volume is checked.
2) If there is undispensed volume, take no further action, and generate error message "undispensed volume."
3) If there is not undispensed volume, home pipettor, and home Z.
4) If Z will not home, open tip drawer, and home Z.
5) If Z will still not home, generate error message "Z axis will not home."
6) If tips are installed, unload tips.
7) If tips are not installed, home pipettor.

### J. Firmware Pipetting Event Execution

A pipetting event as defined above may comprise a series of intermediate commands. For example, the following event command may be used at time T to transfer A microliters from column B in the reagent plate to column C in the assay plate using tips from column D in the tip rack, with mixing cycles of E and volume F.
PIPETT A BR CA D E F
A series of events is preloaded to the fluidics module before the read begins. The command "events" recalls all events stored, and the command "clear events" clears them.

The following pseudocode describes a possible sequence for performing this operation.
CHECK TIME FOR NEXT EVENT
CHECK TIP STATUS FOR NEXT EVENT
**CHANGE TIPS IF INCORRECT**
UNLOAD TIPS
MOVE Z TO TIP LOAD CLEAR
MOVE TIP CARRIER TO LAST LOAD COLUMN
MOVE Z TO TIP LOAD
UNLOAD TIPS
ACTUATE VOLUME TO -20 µL
REHOME VOLUME TO 0
MOVE Z TO TIP LOAD CLEAR
LOAD TIPS
MOVE TIP CARRIER TO COLUMN D
MOVE Z TO TIP LOAD
LOAD TIPS
ADJUST CURRENT TO NUMBER OF TIP TO BE LOADED
MOVE Z DOWN 6 MM TO 10 MM/SEC
REHOME Z
MOVE TIP CARRIER TO COLUMN 0
ASPIRATE FOR NEXT EVENT ONE MINUTE BEFORE T
MOVE Z TO REAGENT PLATE CLEAR
MOVE REAGENT PLATE TO COLUMN B
MOVE Z TO REAGENT PLATE ASPIRATE
ASPIRATE
MOVE TO -20 µL
REHOME TO 0
ASPIRATE
MOVE Z TO REAGENT PLATE CLEAR
ASPIRATE AIR GAP
MOVE REAGENT PLATE TO COLUMN 0
DISPENSE AT TIME T
CHECK INSTRUMENT STATUS
CHECK COLUMN
REQUEST COLUMN IF NOT CORRECT
HOLD PIPETTING UNTIL COLUMN AVAILABLE
HOLD REQUEST TO INSTRUMENT
MOVE Z TO ASSAY PLATE DISPENSE
DISPENSE VOLUME PLUS DEAD BAND PLUS AIR GAP
LOG DISPENSE COLUMN AND TIME
MOVE Z TO REAGENT PLATE CLEAR

### Example 6

This example describes alternative mechanisms for delivering excitation light and collecting emission and/or transmitted light that may be used to improve performance and/or provide additional functions and features. It is assumed, where appropriate, that reading commences at a repetition rate R at some time before, during, or after dispensing from multiple pipettes. Sampling continues at a rate R for a total sampling period T. The pipettes may dispense one at a time, all at once, or in any desired sequence relative to one another.

### Exemplary embodiment:

1) 8 or 16 simultaneous pipettors, single channel scanning read head:
2) Flash lamp → monochromator → fiber → scanning bottom reading achromatic optical head → optical fiber → monochromator → PMT

### Alternative embodiment(s):

1) Detection architecture for higher throughput and/or higher read rate (e.g., readings per second), R, would employ simultaneous excitation/detection of multiple (n) wells, e.g., n = 8 or 16. More generally, 1 < n ≤ 3456 wells.
2) Flash lamp, arc lamp, or laser → monochromator or filter → n optical fibers → n bottom reading achromatic optical heads → n optical fibers monochromator of filter → n PMTs or n photodiodes, photodiode array, avalanche photodiodes or avalanche diode array or a suitable CCD (rectangular or square, cooled to a satiable temperature to insure adequate signal to background ratio)

The efficiency of the optical head can be improved by using a dichroic filter, which could be changed either manually or automatically whenever the reporter wavelength was changed. Suitable dichroic filters are described in the following patent application: Publication No. WO 00/55372, published September 21, 2000. Alternatively, or in addition, the system could also be used to read fluorescence polarization if the optical head included means to separate and detect changes in sample emission polarization in response to polarized excitation light, such as a polarizing beam splitter, a set of switchable polarizers, and/or a fixed and a rotating polarizer. Suitable polarizers are described in the following patents and patent applications: U.S. Patent No. 6,097,025, issued August 1, 2000; and Publication No. WO 99/23466, published May 14, 1999.

### Example 7

This example describes additional embodiments that may be used to measure rapid kinetics, such as fluorescent reactions that occur in milliseconds to seconds. This ability is especially useful for monitoring fast reactions in biological cells, such as cell membrane potential changes. Many current instruments can measure fluorescence values only at about 1 Hz, which is too slow for many of applications.

### Exemplary embodiment:

The exemplary embodiment as described above includes an 8-channel pipettor (that dispenses into 8 different wells of a microplate simultaneously) and a fluorescence reading head that reads fluorescence in each of the 8 wells sequentially following the dispensing step. The problem is that the interval of time between repeat readings on each well may be quite long, because all 8 wells have to be read before the read head returns to the first well. To speed up the process, the pipette tips have to be specially loaded by hand so that only one pipette tip is loaded (in each row of 8), and then the instrument instructed to read only those wells where the pipette tips are loaded. This can lead to significant manual effort and means that only 1/8 of a plate can be monitored before the tips again have to be manually loaded in still another special pattern.

### Alternative embodiment(s):

The alternative embodiment would again have 8 pipettors arranged in a row. The improvement comprises having each pipettor independently activatable. In this way, an entire 96-well plate of cells, a 96-well sample plate, and a 96-well rack of tips could be loaded into the instrument. One well at a time could be selected for monitoring fluorescence. The entire row of 8 pipette tips could be loaded simultaneously, as described above. In the alternative version, only the selected well (i.e., one well at a time) would receive liquid from the dispenser, and this well subsequently could be monitored at a very high repetition rate. Repetition rates could be any rate between about 10 Hz and about 1 megahertz. More specifically, repetition rates from about 1 Hz to about 1 kilohertz would be preferred for excitation by a flash lamp.

The alternative embodiment could thereby analyze each well at a very high repetition rate (i.e., where the interval between measurements is much less than 1 second). The number of repetitions (and the total length of time each well is analyzed) could be selected by the user. Each well could be monitored for the same predetermined length of time. Alternatively, different wells within a microplate could have different lengths of total analysis time or different analysis interval times.

### Physical Embodiments:

Each pipettor could be separately actuated, mechanically, electrically (e.g., by an electrically driven solenoid), or by other mechanical or hydraulic means, such as by using air or other liquid or gas pressure. Additionally, each separately activated pipettor could also be provided with a means to allow each pipettor to travel up and down separately. In this way, only one of the (e.g., 8) pipette tips could be lowered into a cell for dispensing. (Sometimes it is desirable to lower the tip below the liquid surface in the receiving well to touch off a droplet, or to triturate the liquid in a mixing fashion so as to completely mix the sample and the medium in the well.)

### Example 8

This example describes selected aspects of exemplary embodiments of the instrument system of the invention that utilize time tagging, as described above.

The instrument system of the invention may include a time tagging characterization system that comprises a multiple sample preparation system for preparing multiple samples within a multi-well microplate; a first processor coupled to said multiple sample preparation system, wherein said first processor controls the preparation of each of said multiple samples, wherein said first processor determines at least one time tag of a first type for each of said multiple samples, wherein said first type of time tag corresponds to a sample preparation step; a first time recorder couples to said first processor, wherein said first time recorder records each time tag of said first type of time tag; a multiple sample characterization system for determining at least one characteristic of each of said multiple samples, wherein said characteristic is selected from the group consisting of fluorescence, luminescence, and absorption; a second processor coupled to said multiple sample characterization system, wherein said second processor controls the characterization of each of said multiple samples, wherein said second processor determines at least one time tag of a second type for each of said multiple samples, and wherein said second type of time tag corresponds to a sample characterization step; and a second time recorder coupled to said second processor, wherein said second time recorder records each time tag of said second type of time tag.

The time tagging characterization system may utilize a time tagging scheme wherein a first time tag of said first type of time tag corresponds to a first time and each time tag of said first type thereafter corresponds to said first time plus an increasing time period, wherein said time period increases by a predetermined increment for each succeeding time tag of said first type, and wherein a first time tag of said second type of time tag corresponds to a second time and each time tag of said second type thereafter corresponds to said second time plus said increasing time period, wherein said time period increases by said predetermined increment for each succeeding time tag of said second type.

The time tagging characterization system also may utilize a time tagging scheme wherein each time tag of said first type and each time tag of said second type corresponds to an actual chronological time.

The time tagging characterization system may further include a clock coupled to said first processor and to said second processor.

The time tagging characterization system may further include a data presentation system coupled to said first and second processors, wherein said data presentation system is selected from the group consisting of monitors, plotters, and printers.

The time tagging characterization system may be used to perform a method of characterizing a plurality of samples contained within a plurality of sample wells of a multi-well microplate, the method comprising the steps of: sequentially preparing said plurality of samples within said plurality of sample wells, wherein a first constant time interval is not required between preparation of successive samples of said plurality of samples; recording a first plurality of time tags, wherein each of said first plurality of time tags corresponds to the preparation of one of said plurality of samples; measuring luminescence from each sample of said plurality of samples, wherein a second constant time interval is not required between successive luminescence measurements; and recording a second plurality of time tags, wherein each of said second plurality of time tags corresponds to the step of measuring luminescence from one of said plurality of samples.

The time tagging method may include a scheme wherein each of said first plurality of time tags corresponds to a specific step of the preparation of each of said plurality of samples, wherein said specific step is selected from the groups of steps consisting of adding a samples component, adding a reactant, adjusting a sample temperature, adjusting a temperature corresponding to said plurality of samples wells, adjusting a sample humidity, adjusting a humidity corresponding to said plurality of sample wells, adjusting a sample gas pressure, adjusting a gas pressure corresponding to said plurality of sample wells, selecting a sample gas type, and selecting a gas type corresponding to said plurality of sample wells.

The time tagging method may further include the step of determining a plurality of time intervals, wherein each of said plurality of time intervals corresponds to a time separation between one of said first plurality of time tags and one of said second plurality of time tags, wherein said plurality of time intervals corresponds to said plurality of samples.

The time tagging method may further include the steps of: measuring luminescence from each sample of at least a portion of said plurality of samples; and recording a third plurality of time tags, wherein each of said third plurality of time tags corresponds to the step of measuring luminescence from one of said portion of said plurality of samples.

The time tagging method may further include the step of determining a plurality of time intervals, wherein each of said plurality of time intervals corresponds to a time separation between one of said first plurality of time tags and one of said third plurality of time tags, wherein said plurality of time intervals corresponds to said portion of said plurality of samples.

The time tagging characterization system may be used to perform a method of characterizing a plurality of samples contained within a plurality of sample wells of a multi-well microplate, where the method includes the steps of: sequentially preparing said plurality of samples within said plurality of samples wells, wherein a first constant time interval is not required between preparation of successive samples of said plurality of samples; recording a first plurality of time tags, wherein each of said first plurality of time tags corresponds to the preparation of one of said plurality of samples; measuring fluorescence from each sample of said plurality of samples, wherein a second constant time interval is not required between successive fluorescence measurements; and recording a second plurality of time tags, wherein each of said second plurality of time tags corresponds to the step of measuring fluorescence from one of said plurality of samples.

The time tagging method may include a scheme wherein each of said first plurality of time tags corresponds to a specific step of the preparation of each of said plurality of samples, wherein said specific step is selected from the group of steps consisting of adding a sample component, adding a reactant, adjusting a sample temperature, adjusting a temperature corresponding to said plurality of sample wells of sample wells, adjusting a sample humidity, adjusting a humidity corresponding to said plurality of sample wells, adjusting a sample gas pressure, adjusting a gas pressure corresponding to said plurality of sample wells, selecting a sample gas type, and selecting a gas type corresponding to said plurality of sample wells.

The fluorescence measuring step of the time tagging method may also include the step of irradiating each sample of said plurality of samples with an excitation light.

The time tagging method may also include the step of determining a plurality of time intervals, wherein each of said plurality of time intervals corresponds to a time separation between one of said first plurality of time tags and one of said second plurality of time tags, wherein said plurality of time intervals corresponds to said plurality of samples.

The time tagging method may also include the steps of: measuring fluorescence form each sample of at least a portion of said plurality of samples; and recording a third plurality of time tags, wherein each of said third plurality of time tags corresponds to the step of measuring fluorescence from one of said portion of said plurality of samples.

The time tagging method may also include the step of determining a plurality of time intervals, wherein each of said plurality of time intervals corresponds to a time separation between one of said first plurality of time tags and one of said third plurality of time tags, wherein said plurality of time intervals corresponds to said portion of said plurality of samples.

Alternatively, the time tagging method of the invention may include a method of characterizing a plurality of samples contained within a plurality of sample wells of a multiwell microplate, the method including the steps of; sequentially preparing said plurality of samples within said plurality of sample wells, wherein a first constant time interval is not required between preparation of successive samples of said plurality of samples; recording a first plurality of time tags, wherein each of said first plurality of time tags corresponds to the preparation of one of said plurality of samples; measuring absorption of each sample of said plurality of samples, wherein a second constant time interval is not required between successive absorption measurements; and recording a second plurality of time tags, wherein each of said second plurality of time tags corresponds to the step of measuring absorption from one of said plurality of samples.

The step of measuring absorption may include the step of irradiating each sample of said plurality of samples with light from a light source.

The time tagging method may further include the step of determining a plurality of time intervals, wherein each of said plurality of time intervals corresponds to a time separation between one of said first plurality of time tags and one of said second plurality of time tags, wherein said plurality of time intervals corresponds to said plurality of samples.

The time tagging method may further include the steps of: measuring absorption from each sample of at least a portion of said plurality of samples; and recording a third plurality of time tags, wherein each of said third plurality of time tags corresponds to the step of measuring absorption from one of said portion of said plurality of samples.

The time tagging method may also include the step of determining a plurality of time intervals, wherein each of said plurality of time intervals corresponds to a time separation between one of said first plurality of time tags and one of said third plurality of time tags, wherein said plurality of time intervals corresponds to said portion of said plurality of samples.

## Claims

1. An instrument for analyzing a sample, comprising:
a detection device (1201) configured to detect light from a sample at an examination site (1604), a sample delivery axis extending substantially vertically from the examination site (1604);
a dispense assembly (504,600) that is moveable along the sample delivery axis to deliver fluid to the examination site; and
at least one material exchange station (1600) located along the sample delivery axis above the examination site, the material exchange station being configured for exchanging materials such as pipettes and reagents with the dispense system.

2. The instrument of claim 1, wherein the examination site (1604) is one of a plurality of examination sites located at an analysis station (104), each examination site having a sample delivery axis extending vertically from the examination site to the material exchange station (1600).

3. The instrument of any of claims 1 or 2 further comprising a carriage assembly (554A) configured to move material to and from the material exchange station (1600) in a direction substantially perpendicular to the sample delivery axis.

4. The instrument of any of claims 1 to 3 further comprising a second material exchange station (1602), each material exchange station (1600, 1602) being located above the examination site along the sample delivery axis.

5. The instrument of claim 4, wherein each material exchange station (1600, 1602) has a carriage assembly (554A, 554B) configured to move material substantially perpendicularly to the sample delivery axis.

6. The instrument of claim 5, wherein the carriage assemblies (554A, 554B) are configured to move in substantially parallel directions relative to each other.

7. The instrument of any of claims 4 to 6, wherein one of the material exchange stations is adapted to be used as an analysis station in a light detection instrument.

8. The instrument of any of claims 1 to 7, wherein the dispense assembly (504, 600) includes an array of fluid delivery channels (602).

9. The instrument of claim 8, wherein the fluid delivery channels (602) comprise pipette channels.

10. The instrument of claim 8 or 9, wherein the material exchange station (1600) is configured to transfer pipette tips to and from the fluid delivery channels (602) on the dispense assembly (504, 600).

11. The instrument of any of claims 7 to 10 further comprising a drive mechanism (506) that causes the dispense assembly (504, 600) to exert a force on pipette tips located at the material exchange station (1600).

12. The instrument of claim 11, wherein the amount of force exerted by the dispense assembly (504, 600) is variable depending on the number of pipette tips located at the station (1600).

13. The instrument of any one of claims 1 to 12, further comprising
a tip loading station positioned along the sample delivery axis where disposable tips can be temporarily attached and detached to and from the dispense assembly;
a tip carrier assembly that is moveable in a direction perpendicular to the sample delivery axis to and from the tip loading station; and where
an examination site positioned along the sample delivery axis, wherein the dispense assembly is configured to be moved along the sample delivery axis to pick up tips at the tip loading station and to deliver fluid to the examination site.

14. The instrument of any of claims 10 to 13, wherein the dispense assembly has a tip removal mechanism.

15. The instrument of any one of claims 1 to 14 having at least two material exchange stations (1600, 1602) located along the sample delivery axis, the dispense assembly (504, 600) being moveable to each material exchange station (1600, 1602) to pick up or deposit materials used to conduct an assay.

16. The instrument of claim 15, wherein a first of the material exchange stations in configured to exchange pipette tips, and the second material exchange station is configured to exchange fluid using the pipette tips obtained at the first material exchange station.

17. The instrument of claim 16, wherein the first material exchange station (1600) is above the second material exchange station (1602) along the sample delivery axis.

18. The instrument of any one of claims 15 to 17, wherein the dispense assembly (504, 600) is movable to an analysis station (1604) positioned below the material exchange stations (1600, 1602) along the sample delivery axis, wherein the material exchange and analysis stations are positioned so that as the dispense assembly (504, 600) moves down the delivery axis it first encounters a material exchange station (1600) that transfers pipette tips, then a material exchange station (1602) that transfers fluid and then the examination site (1604).

19. The instrument of any of claims 1 to 18 further comprising a first processor coupled to the dispense assembly, wherein the first processor controls the preparation of each of a plurality of samples and determines at least one time tag corresponding to a sample preparation step for each of the plurality of samples.

20. The instrument of any one of claims 1 to 19, further comprising
an analysis chamber having an opening above an examination site; and
wherein the dispense assembly is dimensioned in relation to the opening such that light transmission through the opening may be substantially blocked when the dispense assembly is delivering fluid to the examination site.

21. The instrument of any one of claims 2 to 20, wherein the analysis station includes top and bottom optics heads, each optics head being moveable laterally for detecting light from the plural examination sites.

22. The instrument of claim 21, wherein the top optics head is moveable out of the way of the pipette device when fluid is being delivered.

23. A method of performing an analysis on a sample using the instrument of any one of claims 1 to 20, comprising:
transporting robotically (i.e. by automated apparatus) a dispense assembly along a sample delivery axis to a fluid transfer station;
aspirating fluid at the fluid transfer station to the dispense assembly for further transport along the sample delivery axis;
robotically transporting the dispense assembly further along the sample delivery axis to an examination site;
dispensing fluid from the pipette tips to a sample container at the examination site; and
detecting light from fluid at the examination site.

24. The method of claim 23 further comprising:
robotically transporting the dispense assembly along the sample delivery axis to a pipette tip loading station; and
loading one or more pipette tips onto the dispense assembly before transporting the dispense assembly to the fluid transfer station.

25. The method of claim 23 or claim 24, wherein all of the steps are performed generally along a single linear processing path.

26. The method of any of claims 23 to 25, wherein the step of dispensing fluid from the pipette tips further comprises recording a plurality of time tags corresponding to an addition of fluid to each of a plurality of samples.

27. The method of any of claims 23 to 26, wherein the step of detecting light from fluid at the examination site further comprises recording a plurality of time tags corresponding to detecting light from each of a plurality of samples.

## Patentansprüche

1. Ein Instrument zur Analyse einer Probe, aufweisend:
eine Detektionseinrichtung (1201), konfiguriert, Licht von einer Probe in einer Untersuchungstelle (1604) zu detektieren, eine Probenübergabeachse, die sich im Wesentlichen vertikal von der Untersuchungsstelle (1604) erstreckt,
eine Spenderanordnung (504, 600), die entlang der Probenübergabeachse beweglich ist, um Flüssigkeit zur Untersuchungsstelle zu transportieren; und
mindestens eine Materialaustauschstation (1600), angeordnet entlang der Probenübergabeachse über der Untersuchungstelle, wobei die Materialaustauschstation dafür eingerichtet ist, Materialien, wie Pipetten und Reagenzien mit dem Spendersystem auszutauschen.

2. Das Instrument nach Anspruch 1, wobei die Untersuchungsstelle (1604) eine von einer Vielzahl von Untersuchungsstellen ist, die an einer Analysestation (104) angeordnet sind, wobei jede der Untersuchungsstellen eine Probenübergabeachse auf weist, die sich vertikal von der Untersuchungsstellen zur Materialaustauschstation (1600) erstreckt.

3. Das Instrument nach einem der Ansprüche 1 oder 2, des Weiteren aufweisend eine Beförderungsvorrichtung (554A) dafür eingerichtet, Material von und zur Materialaustauschstation (1600) in einer im Wesentlichen senkrechten Richtung zur Probenübergabeachse zu bewegen.

4. Das Instrument nach einem der Ansprüche 1 bis 3, des Weiteren aufweisend eine zweite Materialaustauschstation (1602), wobei jede der Materialaustauschstationen (1600, 1602) überhalb der Untersuchungstelle entlang der Probenübergabeachse angeordnet ist.

5. Das Instrument nach Anspruch 4, wobei jede Materialaustauschstation (1600,1602) eine Beförderungsvorrichtung (554A, 554B) hat, die dafür eingerichtet ist, Material im Wesentlichen senkrecht zur Probenübergabeachse zu bewegen.

6. Das Instrument nach Anspruch 5, wobei die Beförderungsvorrichtungen (554A, 554B) dafür eingerichtet sind, sich im Wesentlichen senkrecht zueinander zu bewegen.

7. Das Instrument nach einem der Ansprüche 4 bis 6, wobei eine der Materialaustauschstationen dafür eingerichtet ist, als Analysestation in einem Lichtdetektionsinstrument verwendet zu werden.

8. Das Instrument nach einem der Ansprüche 1 bis 7, wobei die Spenderanordnung (504, 600) eine Matrix aus Flüssigkeitstransportkanälen (602) beinhaltet.

9. Das Instrument nach Anspruch 8, wobei die Flüssigkeitstransportkanäle (602) Pipettenkanäle aufweisen.

10. Das Instrument nach Anspruch 8 oder 9, wobei die Materialaustauschstation (1600) dafür eingerichtet ist, Pipettenspitzen zwischen den Flüssigkeitstransportkanälen (602) und der Spenderanordnung (504, 600) hin- und her zu transportieren.

11. Das Instrument nach einem der Ansprüche 7 bis 10, des Weiteren aufweisend einen Antriebsmechanismus (506), welcher die Spenderanordnung (504, 600) eine Kraft auf die Pipettenspitzen ausüben lässt, die an der Materialaustauschstation (1600) vorhanden sind.

12. Das Instrument nach Anspruch 11, wobei die Menge der Kraft, ausgeübt von der Spenderanordnung (504, 600) variable ist, abhängig von der Zahl der Pipettenspitzen die an der Station (1600) vorhanden sind.

13. Das Instrument nach einem der Ansprüche 1 bis 12, des Weiteren aufweisend
eine Spitzenaufnahmestation, angeordnet entlang der Probenübergabeachse, in welcher Einwegspitzen kurzzeitig von der Spenderanordnung abgenommen und an sie angebracht werden können;
ein Spitzenträgeranordnung, die entlang einer zur Probenübergabeachse senkrechten Richtung von der Spitzenaufnahmestation hin- und wieder wegbewegbar ist; und wobei
eine entlang der Probenübergabeachse angeordnete Untersuchungsstelle, wobei die Spenderanordnung dafür eingerichtet ist, entlang der Probenübergabeachse bewegt zu werden, um Spitzen an der Ladestation abzuholen und Flüssigkeit zur Untersuchungsstelle zu transportieren.

14. Das Instrument nach einem der Ansprüche 10 bis 13, wobei die Spenderanordnung einen Spitzenentfernungsmechanismus hat.

15. Das Instrument nach einem der Ansprüche 1 bis 14, aufweisend mindestens zwei Materialaustauschstationen (1600, 1602), die entlang der Probenübergabeachse angeordnet sind und die Spenderanordnung (504, 600) zu jeder Materialaustauschstation (1600, 1602) hin beweglich ist, um Materialien abzuholen oder hinzubringen, um eine Untersuchung durchzuführen.

16. Das Instrument nach Anspruch 15, wobei eine erste Materialaustauschstation (1600) dafür eingerichtet ist, Pipettenspitzen auszutauschen und die zweite Materialaustauschstation (1602) dafür eingerichtet ist, Flüssigkeit unter Gebrauch der Pipettenspitzen, die an der ersten Materialaustauschstation erhalten wurden, auszutauschen.

17. Das Instrument nach Anspruch 16, wobei sich die erste Materialaustauschstation (1600) über der zweiten Materialaustauschstation (1602) entlang der Probenübergabeachse befindet.

18. Das Instrument nach einem der Ansprüche 15 bis 17, wobei die Spenderanordnung (504, 600) zu einer Analysestation (1604) beweglich ist, die unterhalb der Materialaustauschstationen (1600, 1602) entlang der Probenübergabeachse angeordnet sind, wobei die Materialaustausch- und Analysestationen so angeordnet sind, dass wenn sich die Spenderanordnung (504, 600) an der Übergabeachse herunter bewegt, zuerst eine Materialaustauschstation (1600) begegnet, die Pipettenspitzen übergibt, und dann eine Materialaustauschstation (1602), die Flüssigkeit übergibt und dann die Untersuchungstelle (1604).

19. Das Instrument nach einem der Ansprüche 1 bis 18, des Weiteren aufweisend einen ersten Prozessor, der mit der Spenderanordnung gekoppelt ist, wobei der erste Prozessor die Präparation einer Vielzahl von Proben kontrolliert und mindestens einen Zeitstempel für jeden Probenpräparationsschritt für jede der Vielzahl von Proben bestimmt.

20. Das Instrument nach einem der Ansprüche 1 bis 19, des Weiteren aufweisend eine Analysekammer mit einer Öffnung überhalb der Untersuchungstelle; und wobei die Spenderanordnung so im Verhältnis zur Öffnung dimensioniert ist, dass Lichteinfall durch die Öffnung im Wesentlichen unterdrückt wird, wenn die Spenderanordnung Flüssigkeit zur Untersuchungsstelle befördert.

21. Das Instrument nach einem der Ansprüche 2 bis 20, wobei die Analysestation obere und untere optische Köpfe beinhaltet und jede der optischen Köpfe lateral beweglich ist, um Licht von der Vielzahl von Untersuchungsstellen zu detektieren.

22. Das Instrument nach Anspruch 21, wobei der obere optische Kopf aus dem Weg der Pipettenanordnung beweglich ist, wenn Flüssigkeit angeliefert wird.

23. Ein Verfahren zur Durchführung einer Analyse einer Probe unter Verwendung des Instruments nach einem der Ansprüche 1 bis 20, aufweisend:
robotergebundenes Transportieren (d.h. durch automatisierten Apparat) einer Spenderanordnung entlang einer Probenübergabeachse zu einer Flüssigkeitsübergabestation;
Einsaugen von Flüssigkeit an der Flüssigkeitsübergabestation in die Spenderanordnung für den weiteren Transport entlang der Probenübergabeachse;
robotergebundenes Transportieren der Spenderanordnung weiter entlang der Probenübergabeachse zu einer Untersuchungstelle;
Spenden von Flüssigkeit von den Pipettenspitzen zu einem Probenbehälter an der Untersuchungstelle; und
Detektieren von Licht von der Flüssigkeit an der Untersuchungstelle.

24. Das Verfahren nach Anspruch 23, des Weiteren aufweisend:
robotergebundenes Transportieren der Spenderanordnung entlang der Probenübergabeachse zu einer Pipettenspitzenladestation; und
Laden einer oder mehr Pipettenspitzen auf die Spenderanordnung vor dem Transportieren der Spenderanordnung zur Flüssigkeitsübergabestation.

25. Das Verfahren nach einem der Ansprüche 23 oder 24, wobei alle Schritte allgemein entlang einem einzelnen linearen Verarbeitungsweg liegen.

26. Das Verfahren nach einem der Ansprüche 23 bis 25, wobei der Schritt des Spendens von Flüssigkeit aus der Pipettenspitze des Weiteren das Aufnehmen einer Vielzahl von Zeitstempeln aufweist, die mit dem Zufügen von Flüssigkeit zu jeder der Vielzahl von Proben korreliert.

27. Das Verfahren nach einem der Ansprüche 23 bis 26, wobei der Schritt des Detektierens von Licht von der Flüssigkeit in der Untersuchungstelle des Weiteren das Aufnehmen einer Vielzahl von Zeitstempeln aufweist, die mit dem Detektieren von Licht von jeder der Vielzahl von Proben korreliert.

## Revendications

1. Instrument d'analyse d'un échantillon comprenant :
un dispositif de détection (1201) configuré pour détecter de la lumière provenant d'un échantillon au niveau d'un site d'examen (1604), un axe de délivrance d'échantillon s'étendant de manière pratiquement verticale depuis le site d'examen (1604),
un ensemble de distribution (504, 600) qui est mobile le long de l'axe de délivrance d'échantillon pour délivrer un fluide au site d'examen, et
au moins un poste d'échange de matériau (1600) localisé le long de l'axe de délivrance d'échantillon au-dessus du site d'examen, le poste d'échange de matériau étant configuré pour échanger des matériaux tels que des pipettes et des réactifs avec le système de distribution.

2. Instrument selon la revendication 1, dans lequel le site d'examen (1604) est un site parmi une pluralité de sites d'examen localisés au niveau d'un poste d'analyse (104), chaque site d'examen ayant un axe de délivrance d'échantillon s'étendant verticalement depuis le site d'examen jusqu'au poste d'échange de matériau (1600).

3. Instrument selon l'une quelconque des revendications 1 et 2, comprenant en outre un ensemble de chariot (554A) configuré pour déplacer un matériau vers et depuis le poste d'échange de matériau (1600) dans une direction sensiblement perpendiculaire à l'axe de délivrance d'échantillon.

4. Instrument selon l'une quelconque des revendications 1 à 3, comprenant en outre un deuxième poste d'échange de matériau (1602), chaque poste d'échange de matériau (1600, 1602) étant localisé au-dessus du site d'examen le long de l'axe de délivrance d'échantillon.

5. Instrument selon la revendication 4, dans lequel chaque poste d'échange de matériau (1600, 1602) comporte un ensemble de chariot (554A, 554B) configuré pour déplacer un matériau de manière sensiblement perpendiculaire à l'axe de délivrance d'échantillon.

6. Instrument selon la revendication 5, dans lequel les ensembles de chariots (554A, 554B) sont configurés pour se déplacer dans des directions sensiblement parallèles l'un par rapport à l'autre.

7. Instrument selon l'une quelconque des revendications 4 à 6, dans lequel l'un des postes d'échange de matériau est conçu pour être utilisé en tant que poste d'analyse dans un instrument de détection de lumière.

8. Instrument selon l'une quelconque des revendications 1 à 7, dans lequel l'ensemble de distribution (504, 600) comprend un réseau de canaux de délivrance de fluide (602).

9. Instrument selon la revendication 8, dans lequel les canaux de délivrance de fluide (602) comprennent des canaux de pipettes.

10. Instrument selon la revendication 8 ou 9, dans lequel le poste d'échange de matériau (1600) est configuré pour transférer des pointes de pipettes vers et depuis les canaux de délivrance de fluide (602) sur l'ensemble de distribution (504, 600).

11. Instrument selon l'une quelconque des revendications 7 à 10, comprenant en outre un mécanisme d'entraînement (506) qui amène l'ensemble de distribution (504, 600) à exercer une force sur les pointes de pipettes localisées au niveau du poste d'échange de matériau (1600).

12. Instrument selon la revendication 11, dans lequel la valeur de la force exercée par l'ensemble de distribution (504, 600) est une variable qui dépend du nombre de pointes de pipettes localisées au niveau du poste (1600).

13. Instrument selon l'une quelconque des revendications 1 à 12, comprenant en outre
un poste de chargement de pointes positionné le long de l'axe de délivrance d'échantillon où des pointes jetables peuvent être temporairement fixées sur l'ensemble de distribution et en être détachées,
un ensemble de support de pointes, qui est mobile dans une direction perpendiculaire à l'axe de délivrance d'échantillon vers et depuis le poste de chargement de pointes, et où
un site d'examen positionné le long de l'axe de délivrance d'échantillon, dans lequel l'ensemble de distribution est configuré pour être déplacé le long de l'axe de délivrance d'échantillon pour prélever les pointes au niveau du poste de chargement de pointes et pour délivrer un fluide au site d'examen.

14. Instrument selon l'une quelconque des revendications 10 à 13, dans lequel l'ensemble de distribution comporte un mécanisme d'enlèvement de pointes.

15. Instrument selon l'une quelconque des revendications 1 à 14, comportant au moins deux postes d'échange de matériau (1600, 1602) localisés le long de l'axe de délivrance d'échantillon, l'ensemble de distribution (504, 600) étant mobile vers chaque poste d'échange de matériau (1600, 1602) pour prélever ou déposer des matériaux utilisés pour exécuter un dosage.

16. Instrument selon la revendication 15, dans lequel un premier poste parmi les postes d'échange de matériau est configuré pour échanger des pointes de pipettes, et le deuxième poste d'échange de matériau est configuré pour échanger un fluide en utilisant les pointes de pipettes obtenues au niveau du premier poste d'échange de matériau.

17. Instrument selon la revendication 16, dans lequel le premier poste d'échange de matériau (1600) est au-dessus du deuxième poste d'échange de matériau (1602) le long de l'axe de délivrance d'échantillon.

18. Instrument selon l'une quelconque des revendications 15 à 17, dans lequel l'ensemble de distribution (504, 600) est mobile jusqu'à un poste d'analyse (1604) positionné au-dessous des postes d'échange de matériau (1600, 1602) le long de l'axe de délivrance d'échantillon, où les postes d'échange de matériau et d'analyse sont positionnés, de sorte que, lorsque l'ensemble de distribution (504, 600) se déplace vers le bas le long de l'axe de délivrance, il rencontre tout d'abord un poste d'échange de matériau (1600) qui transfère des pointes de pipettes, puis un poste d'échange de matériau (1602) qui transfère un fluide et ensuite le site d'examen (1604).

19. Instrument selon l'une quelconque des revendications 1 à 18, comprenant en outre un premier processeur couplé à l'ensemble de distribution, où le premier processeur commande la préparation de chaque échantillon d'une pluralité d'échantillons et détermine au moins une étiquette de temps correspondant à une étape de préparation d'échantillon pour chaque échantillon de la pluralité d'échantillons.

20. Instrument selon l'une quelconque des revendications 1 à 19, comprenant en outre :
une chambre d'analyse comportant une ouverture au-dessus d'un site d'examen, et
dans lequel l'ensemble de distribution est dimensionné en relation avec l'ouverture de sorte que la transmission de lumière à travers l'ouverture puisse être pratiquement bloquée lorsque l'ensemble de distribution est en train de délivrer un fluide au site d'examen.

21. Instrument selon l'une quelconque des revendications 2 à 20, dans lequel le poste d'analyse comprend des têtes optiques supérieure et inférieure, chaque tête optique étant mobile latéralement pour détecter de la lumière provenant des plusieurs sites d'examen.

22. Instrument selon la revendication 21, dans lequel la tête optique supérieure est mobile en dehors du chemin du dispositif de pipettes, lorsqu'un fluide est en train d'être délivré.

23. Procédé d'exécution d'une analyse sur un échantillon utilisant l'instrument selon l'une quelconque des revendications 1 à 20, comprenant les étapes consistant à :
transporter de manière robotisée (c'est-à-dire par un dispositif automatisé) un ensemble de distribution le long d'un axe de délivrance d'échantillon jusqu'à un poste de transfert de fluide,
aspirer un fluide au niveau du poste de transfert de fluide vers l'ensemble de distribution en vue d'un autre transport le long de l'axe de délivrance d'échantillon,
transporter de manière robotisée l'ensemble de distribution plus loin le long de l'axe de délivrance d'échantillon jusqu'à un site d'examen,
distribuer un fluide depuis les pointes de pipettes à un récipient d'échantillon au niveau du site d'examen, et
détecter une lumière provenant du fluide au niveau du site d'examen.

24. Procédé selon la revendication 23, comprenant en outre les étapes consistant à :
transporter de manière robotisée l'ensemble de distribution le long de l'axe de délivrance d'échantillon jusqu'à un poste de chargement de pointes de pipettes, et
charger une ou plusieurs pointes de pipettes sur l'ensemble de distribution avant de transporter l'ensemble de distribution jusqu'au poste de transfert de fluide.

25. Procédé selon la revendication 23 ou la revendication 24, dans lequel toutes les étapes sont exécutées globalement le long d'un seul trajet de traitement linéaire.

26. Procédé selon l'une quelconque des revendications 23 à 25, dans lequel l'étape de distribution de fluide depuis les pointes de pipettes comprend en outre l'enregistrement d'une pluralité d'étiquettes de temps correspondant à l'ajout d'un fluide à chaque échantillon d'une pluralité d'échantillons.

27. Procédé selon l'une quelconque des revendications 23 à 26, dans lequel l'étape de détection de lumière provenant du fluide au niveau du site d'examen comprend en outre l'enregistrement d'une pluralité d'étiquettes de temps correspondant à la détection de la lumière provenant de chaque échantillon d'une pluralité d'échantillons.
